# EUROPEAN PATENT APPLICATION

(11) **EP 2 312 875 A1**
(43) Date of publication of application: **20.04.2011**
(21) Application number: 09804728.5
(22) Date of filing: 04.08.2009
(51) Int. Cl.: H04W 8/26, H04W 88/06

(54) **PREFIX ALLOCATION ADMINISTRATION SYSTEM AND MOBILE TERMINAL, AND PREFIX ALLOCATION ADMINISTRATION DEVICE**

(30) Priority: 06.08.2008 JP 2008203094; 28.04.2009 JP 2009110006
(71) Applicant: Panasonic Corporation, Kadoma-shi Osaka 571-8501 (JP)
(72) Inventor: HIRANO, Jun c/o Panasonic Corporation, IPROC, Chuo-ku, Osaka 540-6207 (JP); NG, Chan Wah c/o Panasonic Singapore Laboratories Pte.Ltd., Singapore 534415 (SG); LIM, Chun Keong Benjamin c/o Panasonic Singapore Laboratories Pte.Ltd., Singapore 534415 (SG); JEYATHARAN, Mohana Dhamayanthi c/o Panasonic Singapore Laboratories Pte.Ltd., Singapore 534415 (SG)
(74) Representative: Grünecker, Kinkeldey, Stockmair & Schwanhäusser Anwaltssozietät
(86) International application number: PCT/JP2009/003720
(87) International publication number: WO 2010/016241

(57) **Abstract**

Disclosed is a technique for minimizing the number of prefixes to be allocated to a mobile terminal when the mobile terminal having multiple access technologies moves within a mobility management domain of a local network. According to the technique, management is so performed that prefixes necessary for a mobile terminal (MN 100) to perform communication will be allocated to the MN, and a mobility management domain 110 maintains only the prefixes necessary for the MN to perform communication. For example, when the MN detects a state in which a prefix needs changing (step S120), it determines a state in which network prefixes necessary for the MN are allocated to the MN, and notifies the mobility management domain of prefix preference for achieving this state (step s150). The prefix preference includes a reduce request for unnecessary prefixes, a reuse request on another interface, a recycle request indicative of use at another MN, and the like.

## Description

### TECHNICAL FIELD

The present invention relates to communication technology in a packet-switched data communication network. Particularly, the present invention relates to a prefix allocation administration system and a mobile terminal, and a prefix allocation administration device when a mobile terminal that communicates with a correspondent node has two or more addresses and when a network domain is performing network-based localized mobility management.

### BACKGROUND ART

Many mobile devices (UE: user equipment, which are synonymous with mobile nodes below) today communicate with each other using the Internet Protocol (IP). In order to achieve mobility support for the mobile devices, Internet Engineering Task Force (IETF) has developed techniques regarding mobility support (see Non-Patent Document 1 cited below).

In mobile IP disclosed in Non-Patent Document 1, each mobile node has a permanent home domain. When the mobile node is attached to its home network, it is assigned a primary global address called s a home address (HoA). On the other hand, when the mobile node is away from its home network, i.e., when it is attached to any other foreign network, it is assigned a temporary global address commonly called a care-of address (CoA).

The idea of mobility support is such that the mobile node can be reached at the home address even when it is attached to any other foreign network. In Non-Patent Document 1, this is done with the introduction of an entity called a home agent into the home network. The mobile node registers its care-of-address with the home agent using a message called a binding update (BU) message. This enables the home agent to create association (binding) between the home address and the care-of address of the mobile node. The home agent has the function of intercepting a message destined to the home address of the mobile node and forwarding a packet with the message encapsulated therein to the care-of address of the mobile node. The encapsulation of a packet means that the packet is set in a payload of a new packet, and this is also called packet tunneling.

The mobile IP can solve mobility problems, but other problems arise. For example, the mobile node is required to send a BU message to the home agent. When the mobile node is moving fast, since it frequently changes access points, the number of BU messages generated and sent becomes considerably large. The distance of the mobile node to the home agent may increase, and this may require long time until a BU message sent from the mobile node reaches the home agent. Further, the mobile node may leave the location (care-of address updated using the BU message) before the home agent starts packet forwarding to the care-of address updated by the mobile node through the BU message.

For such reasons, use of network-based local mobility management (NetLMM) as described in Non-Patent Document 2 and Patent Documents 1 and 2 cited below has been proposed. In this NetLMM, the mobile node can continue to use the same address when changing access points within a local network domain without the need to send BU messages frequently to the home agent.

A local mobility anchor (LMA), many mobile access gateways (MAGs) and an AAA (Authentication, Authorization and Accounting) server are located in a local network domain to provide network-based local mobility management.

The MAGs function as access routers to which the mobile node is connected. Each time the mobile node is connected to a MAG, the MAG first has the AAA server verify qualification to check if the mobile node is approved to use services of the local mobility domain. Next, the AAA server notifies the MAG of information on the address or prefix (network prefix) to be allocated to the mobile node. Thus, the MAG can notify the mobile node of a prefix unique to the mobile node called a home network prefix (HNP).

At the same time, the MAG needs to update the local mobility anchor to enable packets destined to the prefix allocated to the mobile node to be tunneled to an appropriate MAG to which the mobile node is currently being connected. This is done by the MAG sending a proxy binding update (PBU) message to the LMA. Based on this PBU message, the LMA associates the address used by the mobile node with the address of the MAG. This method may also be called proxy mobile IP because the MAG sends a BU message as a proxy for the mobile node and the LMA functions as a home agent of the mobile node in the local network domain.

Thus, since the mobile node always receives a notice of the same home network prefix regardless of to which MAG the mobile node is currently being connected, there is no need to change the address. As a result, the mobile node does not need to send BU messages to the home agent frequently as long as it exists in the local mobility domain. Actually, when the mobile node does not have to maintain address reachability during travel between different network domains or when the mobile node moves within the same local network domain alone (i.e., when the mobile node is not away from the same local network domain), the mobile node needs neither to have a global home agent nor to send BU messages.

The same concept as the network-based local mobility management can also be implemented in such a way that the mobile node sends a binding update to the local anchor point like, for example, hierarchical mobile IPv6 described in Patent Documents 3 and 4 or Non-Patent Document 3 cited below.

In the meantime, various radio techniques are now in the process of development. For example, mobile devices with many different kinds of access interfaces, such as Universal Mobile Telecommunications System (UMTS) cellular interface, wireless Ethernet (registered trademark) 802.11 interface, WiMax802.16 interface and Bluetooth (registered trademark) interface, will increase. As a method of supporting devices having such plural interfaces with local mobility management, a method of allocating multiple addresses or multiple prefixes like, for example, a technique described in Patent Document 5 cited below.

In general, two or more LMAs may be located in a local mobility management domain such as a NetLMN domain for the purpose of load balancing. For example, a case is considered where each LMA located manages one or multiple packet data networks (PDN) attached to a NetLMN domain with a PMIPv6 protocol implemented. These packet data networks enable a mobile node to get different types of data services in the NetLMN domain. The mobile node can also get services from one or multiple PDNs.

Use of such PDN services may be statically configured or dynamically negotiated with the mobile node. If statically configured, a PDN connection regarding default service is established by the system without any explicit request from the mobile node for a service (default service) associated with the static configuration. On the other hand, a non-default PDN service or a (additional) service dynamically agreed upon may require the mobile node to request a connection to a PDN for a special service or upon connection. The service requested is provided to the mobile node.

This type of PDN or service requesting model is, for example, employed by standard-setting organizations such as Third Generation Partnership Project (3GPP). In a scenario for multiple LMAs and multiple PDNs, there are two load balancing models (methods of constructing a network in consideration of a load balance). It is considered that use of such load balancing models can distribute the load within the NetLMN domain to the multiple local mobility anchors evenly (or unevenly on purpose).

In the above-mentioned first model, one or more PDNs are managed by a single LMA, and the LMA is located within the NetLMN domain. This load distribution model achieves load balancing based on the fact that mobile nodes within the system use different services in a time slot or at any point in a period and hence they are managed by different LMAs. Thus, load balancing among multiple LMAs is achieved using different LMAs during a period of accessing PDN services. In this load balancing model, a kind of PDN service is always provided by a single LMA.

On the other hand, the other load balancing model is such that one or more PDNs are managed by a group or cloud of LMAs with multiple LMA clouds included in the NetLMN domain. In such a model (farm model) including such multiple LMA clouds, all the LMAs in a farm manage a PDN connected to any LMA in the farm. The principal different between this farm model and the above-mentioned model is in that even when there is no change in connecting condition of a mobile node, a binding cache associated with the mobile node is dynamically passed between LMAs in a farm in the farm model. Basically, in the farm model, a PDN service provided to the mobile node or a prefix used to access the PDN service is managed by the plural LMAs. However, a LMA is responsible for one service alone at any point in a time slot, passing control to various LMAs in the farm during the time interval when the mobile node moves within the NetLMN domain. If the operation with such a farm model is needed, a binding cache associated with the LMA needs to be passed to another LMA and a MAG to which an interface of the mobile node is connected and notified to a new LMA.

In the present PMIPv6 protocol described in Non-Patent Document 4, the operation when a home network prefix allocated to a mobile node can be managed by plural different LMAs or forwarded among plural different LMAs is not explicitly supported. If a prefix handled in the NetLMM domain is obtained from a single top-level prefix, the prefix can be passed between LMAs without affecting the data routing at all. If the prefixes allocated to the LMAs are of topologically independent prefix group, a prefix is passed between LMAs through efficient routing of packets destined to the prefix.

3GPP is considering locating multiple LMAs managing the mobility of mobile nodes within the NetLMM domain. The details and use cases of locating multiple LMAs in 3GPP are mentioned in Non-Patent Document 5 and Non-Patent Document 6. In Non-Patent Document 5, connections of a mobile node via 3GPP accesses and non-3GPP accesses are described, while in Non-Patent Document 6, connections of a mobile node via 3GPP-specific accesses are described.

The 3GPP-specific accesses are Long Term Evolution (LTE) access, Universal Terrestrial Radio Access network (UTRAN) access, General Packet Radio Service (GPRS) access, Code Division Multiple Access (CDMA) 2000 access, etc. Further, the above-mentioned non-3GPP accesses are WLAN access, WiMAX access and the like.

In the 3GPP service architecture framework, a Local Mobility Anchor (LMA) called a PDN Gateway (P-GW) in a 3GPP core network functions as a gateway for providing services from PDNs to mobile nodes. Even in the 3GPP architecture with multiple LMAs located therein, the arrangement of LMAs and its scenario are not limited to 3GPP alone, and they can also be applied to any network (network using the arrangement of multiple LMAs and the same local mobility management mechanism as in PMIPv6). Now, there are many architectures for load balancing among LMAs defined for 3GPP systems.

As an example of 3GPP architecture, a single packet data network may be managed by any LMA, and multiple LMAs may exist in the NetLMM domain. There is also another architecture in which multiple packet data networks are managed by a single LMA and the NetLMM domain is composed of multiple LMAs. In another architecture envisioned by 3GPP, a single packet data network can be managed by a cloud of multiple LMAs and the NetLMM domain is composed of multiple LMA clouds managing multiple PDNs. Further, as still another architecture, there is a configuration in which multiple LMA clouds exist in the NetLMM domain and each LMA cloud manages multiple PDNs.

In all the above-mentioned architectures, each MAG in the NetLMM domain has a tunnel dynamically established to each LMA or the tunnel to each LMA can be dynamically established.

When a mobile node having two or more interfaces is to be attached to the NetLMM domain, the mobile node may be connected to the same LMA or different LMAs through the two or more interfaces. This depends on the load balancing model used in the system, a service (or a PDN) the mobile node has signed up, a LMA allocation policy decided by a system in the farm case, the mobile node's preference for service type associated with the type of specific access technology.

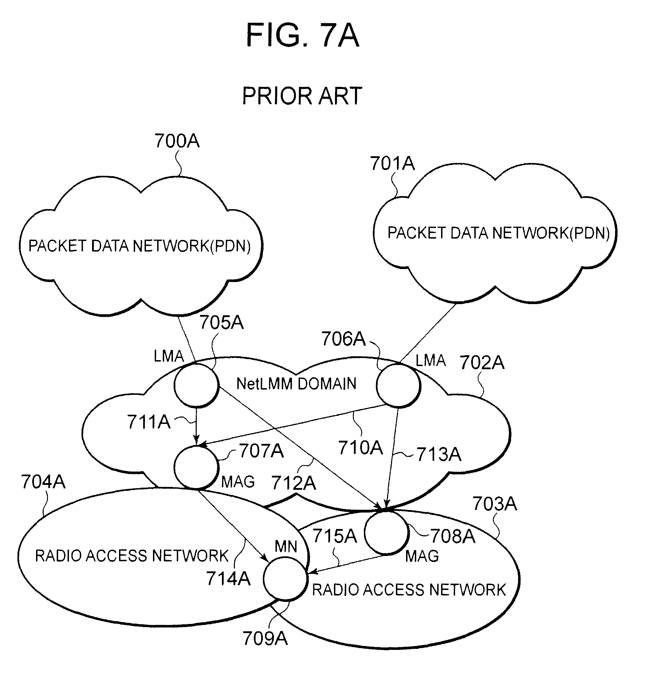

To gain a further understanding of the concurrent connection when multiple LMAs exist, FIG. 7A shows a state where a mobile node having two or more interfaces is attached to a NetLMM domain and appropriate prefixes are allocated to the interfaces.

In a NetLMM domain shown in FIG. 7A, PMIPv6 protocol is implemented. A NetLMM domain 702A shown in FIG. 7A is, for example, a PLMN (Public Land Mobile Network) unique to the 3GPP. When the NetLMM domain 702A is a subdomain (i.e., PLMN) within the 3GPP, a MAG 707A shown in FIG. 7A may be a serving gateway (S-GW) functioning as a 3GPP access MAG, an access gateway functioning as a MAG for a WiMAX access network, or an ePDG (evolved Packet Data Gateway) functioning as an untrusted WLAN access MAG.

A MAG 708A shown in FIG. 7A manages a radio access network 703A different in type from a radio access network 704A managed by the MAG 707A. If the NetLMM domain 702A is specialized for 3G, the MAG 703A will be a gateway such as S-GW, ePDG or AGW. In FIG. 7A, a MN 709A has two interfaces (e.g., LTE interface and WiMAX interface) and is attached to the NetLMM domain 702A.

The MN 709A is connected directly to the MAG 707A through one interface in a point-to-point fashion or by tunneling. The MN 709A is also connected to the MAG 708A through the other interface (e.g., WiMAX interface) in such a manner as to be able to maintain a direct link, point-to-point link or tunnel to the MAG 708A. In this specification, the interface connected to the access network 704A may be denoted as a first interface (IF1) and the interface connected to the access network 703A may be denoted as a second interface (IF2).

In this NetLMM domain 702A, the MN 709A is applying for services from multiple PDNs (e.g., PDN 700A and PDN 701A). The services provided by these PDNs (i.e., PDN 700A and PDN 701A) are considered as default services necessary for the mobile node. It will be apparent to those skilled in the art that the operation to be described here may be implemented even when the mobile node requests the services by an explicit method.

Further, it is considered that the PDN 700A is managed by a LMA 705A and the PDN 701A is managed by a LMA 706A. The MN 709A is first attached to the NetLMM domain 702A via the IF1 and connected to the MAG 707. For example, when connection processing is triggered by the operation unique to access technology in evolved UTRAN (E-UTRAN or LTE), a service subscribed by the MN 709A is notified from a mobility management entity (MME) to the MAG 707A after successful authentication. This MME has an interface to a home subscriber server (HSS functioning as an AAA server), and subscriber information (e.g., service) and information indicative of successful authentication are passed from the home subscriber server to the MME via this interface. Assuming that the MN 709A is first attached to the NetLMM domain 702A, the address of a LMA associated with the MN 709A is not always included in HSS information sent during access authentication.

In the 3GPP, the service subscriber information or service information is commonly represented by a parameter called access point name (APN). This APN information is generally stored in the HSS, and upon successful authentication, it is notified to the MAG via the MME. The APN value associated with a PDN of the NetLMM domain 702A is default APN, and the mobile node does not need to explicitly request such an APN value during connection processing. Upon receipt of a notice of the APN value, the MAG can use an analysis function implemented in the MAG to analyze the APN so as to identify a correct P-GW address associated with the service identified by the APN.

In FIG. 7A, since the MN 709A has signed up for services from both PDNs (the PDN 700A and the PDN 701A), both APN values associated with both PDNs are notified to the MAG 707A. Here, it is assumed that APN 1 corresponds to the PDN 700A and APN 2 corresponds to the PDN 701A. When the MAG 707A analyzes these APN values (APN 1 and APN 2) to identify the address of a LMA, an appropriate proxy binding update (PBU) message indicating that this is a new connection via the interface IF1 is sent to the LMA.

In an environment shown in FIG. 7A, the APNs (i.e., services) are mapped into a single PDN, and the PDN is mapped into a single LMA. When APN analysis is performed using a function preliminarily implemented, since the PDN are mapped into a single LMA or P-GW address, APN 1 and APN 2 are identified as two LMA addresses (e.g., the address of the LMA 705A and the address of the LMA 706A). This causes the MAG 707A to send two PBUs one by one to respective LMAs to acquire prefixes for access to services from the PDNs associated with the NetLMM domain 702A.

A handoff indicator option as disclosed in Non-Patent Document 4 is added to these PBUs, setting the value to "1" indicating initial connection via the IF1. After these PBU messages are sent, signaling messages 710A and 711A are received as responses from the LMAs or proxy binding acknowledgements (PBA). Since this connection is the initial connection via the IF1, no prefix information is generally embedded in the home network prefix option sent through the PBU.

The LMA checks the handoff indicator option in the PBU received. Since the value "1" indicating the initial connection is set in the handoff indicator option of the PBU, a new prefix is sent through each PBA signaling. In other words, the LMA 705A sends PBA signaling 711A to allocate a new prefix by embedding the new prefix in a prefix information option. Similarly, the LMA 706A sends PBA signaling 710A to allocate a new prefix by embedding the new prefix in the prefix information option. In a router advertisement (RA) message 714A sent from the MAG 707A to the MN 709A, HNP acquired from the LMA 705A to access the PDN 700A and HNP acquired from the LMA 706A to access the PDN 701A are included.

Here, it is assumed that the MN 709A connects the IF2 to the MAG 708A. The MAG 708A performs access authentication on the connection of the MN 709A. Meanwhile, appropriate APNs (APN 1 and APN 2) are notified to the MAG 708A through authentication signaling sent from the HSS. The addresses of the LMA705 and the LMA 706A are analyzed from these APNs, and the MAG 708A sends a PBU to each LMA shown in FIG. 7A.

When the IF2 establishes a connection, it is important that the HSS potentially has the addresses of the LMAs associated with the MN 709A as a result of connection completion processing for the IF1. It is considered that the LMAs shown in FIG. 7A generally register their addresses with the HSS after creating binding caches associated with the MN 709A. However, since the connection via the IF2 is a new connection, the MAG 708A does not consider the addresses of the LMAs, returned from the HSS during access authentication and authentication processing, for selection of LMA addresses for connections via the IF2. In the case of vertical handoff, the MAG considers these addresses returned from the HSS to achieve session continuity.

Further, since different prefixes are allocated from the LMAs to different interfaces depending on the PMIPv6 protocol architecture, the MAG 708A receives two different prefixes through the PBA 712A and PBA 713A. The two prefixes received from the MAG 708A are different from the prefixes acquired by the MAG 707A.

Upon receipt of these prefixes, the MAG 708A sends a RA 715A. These prefixes are embedded in the prefix option of the RA 715A. The MN 709A uses the prefixes (e.g., P1 and P3) provided by the RA 714A and the prefixes (e.g., P2 and P4) provided by the RA 715A to configure the addresses of the interfaces IF1 and IF2.

In a scenario as shown in FIG. 7A, the mobile node is trying to connect to a system through plural interfaces to get a service from any PDN via the plural interfaces. For example, the mobile mode may desire to perform flow communication with any PDN via both interfaces, trying to get a service from the PDN via the plural interfaces. The mobile node can connect another interface to set up a flow to the PDN through the alternative interface.

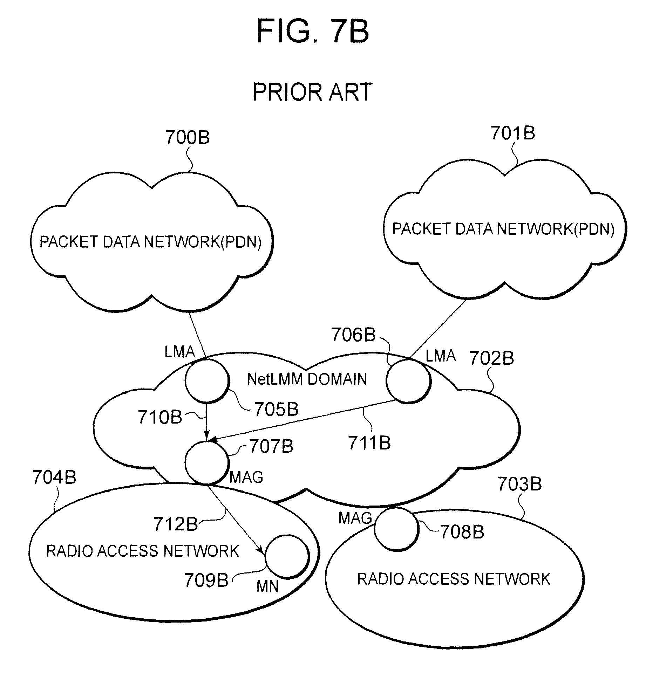

Next, a scenario is considered in which the mobile node moves from the state as shown in FIG. 7A to another state show in FIG. 7B, and as a result, the mobile node loses access to the access network to which the IF2 is being connected. When connectivity via the IF2 is lost as shown in FIG. 7B, the mobile node sends a trigger for vertical handoff to the MAG connected to the existing interface IF1. As a result, the session continuity for the flow associated with the IF2 can be obtained via the IF1.

To gain a further understanding of this scenario, a detailed description will be given with reference to FIG. 7B. When the mobile node has lost connectivity to the access network via the IF2, it is considered that the interface is shut down. FIG. 7B shows a scenario in which an MN 709B acquires two prefixes via the IF1 to get services from PDN 700B and PDN 701B in such a state that the mobile node is first connected to a NetLMM domain 702B via the IF1 and the IF2, and then acquires two prefixes via the IF2 to get services from the PDN 700B and the PDN 701B, shutting down the IF2 that has lost connectivity to an access network 703B. In this case, the MN 709B sends a MAG 707B a trigger for vertical handoff. In FIG. 7B, this trigger for vertical handoff is not clearly shown for the sake of simplifying signaling representations.

When acquiring the trigger for vertical handoff from the MN 709B, the MAG 707B checks a binding list held for the IF1 of the MN 709B to acquire the address of a LMA 705B and the address of a LMA 706B as a result of checking the binding list.

After identifying the addresses of the LMAs, the MAG 707B sets the handoff indicator option to "2" and sends two PBUs one by one to the identified LMAs, respectively. Upon receipt of the PBU having a trigger for vertical handoff, the LMA 705B moves a prefix allocated to the IF2 of the MN 709B to a binding cache entry associated with the IF1 of the MN 709B. The same procedure is performed by the LMA 706B.

After moving the prefix associated with the shut-down interface to a mobility session associated with the IF1, the LMA 705B sends PBA signaling 710B. Similarly, the LMA 706B sends PBA signaling 711B. The PBA signaling 710B has two prefixes to be provided to the IF1 by vertical handoff processing. Similarly, the PBA signaling 711B has two prefixes to be sent through this signaling. The two prefixes sent through the respective PBA signaling are the prefix first allocated to the IF1 and the prefix moved from the IF2 to the IF1 by vertical handoff processing.

Upon receipt of the two prefixes from the PBA 710B and the two prefixes from the PBA 711B, the MAG 707B sends a RA signal 712B with four prefixes embedded therein. The above-mentioned vertical handoff signaling sent from the MN 709B to the MAG 707B contains two APN values associated with a PDN 700B (APN 1) and a PDN 701B (APN 2). However, if the MN 709B shifts all the prefixes associated with the IF2 to be via the IF1, this APN information is not necessarily needed for the vertical handoff trigger.

After the vertical handoff to the IF1 is performed as shown in FIG. 7B, if the MN 709B tries to perform vertical handoff of any subset of prefixes to an interface (i.e., the IF2) newly activated from the IF1, correct prefixes to be shifted from the IF2 cannot be identified by providing only APN information to a MAG connected to the IF2 because plural prefixes are allocated to a single APN on the IF1. For example, when the mobile node has moved from the state in FIG. 7A to the state in FIG. 7B, plural prefixes are allocated to such a single APN. Basically, in FIG. 7B, two prefixes are allocated to the IF1 in association with APN 1 (PDN 700B) and two prefixes are allocated in association with APN 2 (PDN 701B). Therefore, if a subset of prefixes are reused via the IF2, explicit prefix information needs to be provided for the vertical handoff trigger. Further, in a scenario where multiple LMAs exist, the trigger for vertical handoff needs to be sent to an appropriate LMA in the NetLMM domain by providing the subset of prefixes. Thus, in the scenario where multiple LMAs exist, a procedure suited to shift the subset of prefixes to a new interface needs performing.

US Patent Publication No. 2009/0040964 as Patent Document 6 cited below discloses a method for reusing APN and new mobility related signaling as a trigger for address allocation sent from a mobile node to a MAG using RS of DHCP or a new message. The document teaches that this mobility-related signaling needs to configure the same address for all interfaces of the mobile node. A request for configuring the same address is sent from the MAG to a LMA. The technique disclosed in Patent Document 6 is closely related to a PMIPv6 model in which the LMA performs address allocation to the interfaces of the mobile node. Further, the request for allocation of the same address realizes the multihome effects on a flow associated with a predetermined HNP. Basically, in the technique described in Patent Document 6, the APN is used to identify a service and an additional mobility trigger for giving notice of the request for configuring the same address on plural interfaces is embedded.

Further, PCT International Publication No. WO 2006/010382A1 as Patent Document 7 cited below discloses a method of selecting a home agent by specifying a service desired by a mobile node trying to perform MIPv4 or MIPv6 operation. The method disclosed in this Patent Document 7 provides a service identifier or APN to enable P-GW selection.

### PRIOR ART DOCUMENT

### PATENT DOCUMENT

Patent Document 1: PCT International Application Publication No. WO2003/107600
Patent Document 2: PCT International Application Publication No. WO2006/058206
Patent Document 3: PCT International Application Publication No. WO2004/036786
Patent Document 4: PCT International Application Publication No. WO2001/067798
Patent Document 5: US Patent Application Publication No. 2006/0227792
Patent Document 6: US Patent Application Publication No. 2009/0040964
Patent Document 7: PCT International Application Publication No. WO2006/010382

### NON-PATENT DOCUMENT

Non-Patent Document 1: Johnson, D. B., Perkins, C. E., and Arkko, J., "Mobility Support in IPv6," Internet Engineering Task Force Request For Comments 3775, June 2004.
Non-Patent Document 2: Gundavelli, S., et al., "Proxy Mobile IPv6," Internet Engineering Task Force Draft draft-ietf-netlmm-proxymip6-11.txt, Feb 2008.
Non-Patent Document 3: Soliman, H. et al., "Hierarchical Mobile IPv6 Mobility Management (HMIPv6)," Internet Engineering Task Force Request For Comments 4140, August 2005.
Non-Patent Document 4: Gundavelli, S., et. al., "Proxy Mobile IPv6," Internet Engineering Task Force (IETF) Internet Engineering Task Force Request For Comments 5213, August 2008.
Non-Patent Document 5: "3rd Generation Partnership Project; Technical Specification Group Services and System Aspects; Architecture enhancements for non-3GPP accesses," 3GPP TS 23.402, V8.4.1, January 2009.
Non-Patent Document 6: "3rd Generation Partnership Project; Technical Specification Group Services and System Aspects; General Packet Radio Service (GPRS) enhancements for Evolved Universal Terrestrial Radio Access Network (E-UTRAN) access," 3GPP TS 23.401, V8.4.1, December 2008.
Non-Patent Document 7: Muhanna, A. et. al., "Binding Revocation for IPv6 Mobility," Internet Engineering Task Force Draft, draft-ietf-mext-binding-revocation-03.txt, January 2009.

According to Non-Patent Document 2, a mobile node detects various prefixes on each interface and maintains the prefixes as long as the mobile node moves within the same network domain.

If access to domains distributing different prefixes within a network-based local mobility management domain is repeated, since the network prefixes must be maintained as long as the mobile node is attached to the mobility management domain, the mobile node ends up accumulating many prefixes, resulting in a profligate of network resources (especially prefixes).

Further, in a domain such as a NetLMM domain that performs network-based local mobility management, if multiple entities (e.g., LMAs) managing prefixes exist, it may not be able to determine quickly and easily which entity is supposed to manage a prefix allocated from the domain to a mobile terminal.

The technique described in Patent Document 6 cannot be used to implement vertical handoff of a subset of prefixes in an environment where APN is mapped into plural prefixes and there are multiple LMAs with the subset of prefixes associated with the trigger for vertical handoff belonging to a subset of LMAs in the NetLMM domain.

The technique described in Patent Document 7 can select a P-GW for initial connection but does not perform processing for identifying a P-GW for reusing a subset of prefixes upon vertical handoff. When the P-GW for initial connection is selected using MIPv4, MIPv6 or PMIPv6, only service information or APN information may be used.

### SUMMARY OF THE INVENTION

In order to solve the above-mentioned problems, it is an object of the present invention to provide a prefix allocation administration system and a mobile terminal, and a prefix allocation administration device, in which when the mobile terminal having multiple access technologies moves within a mobility management domain of a local network, the number of prefixes to be allocated to the mobile terminal is minimized to enable efficient use of prefixes. It is another object of the present invention to enable a determination easily and quickly on which entity is a primary administration entity for managing prefixes to be allocated to the mobile terminal when multiple prefix managing entities exist within the mobility management domain of the local network so that, for example, a subset of prefixes allocated to an interface can be reused on another interface.

In order to attain the above objects, there is provided a prefix allocation administration system of the present invention, which manages the allocation of network prefixes to a mobile terminal attached to a network-based local mobility domain, wherein
the prefix allocation administration system is configured not to maintain a state in which a network prefix unnecessary for the mobile terminal to perform communication is allocated to the mobile terminal.
According to this configuration, when a mobile terminal having multiple access technologies moves within the mobility management domain of a local network, management is so performed that prefixes necessary for the mobile terminal can be allocated, thereby minimizing the number of prefixes to be allocated to the mobile terminal.

Further, in order to attain the above objects, there is provided a mobile terminal of the present invention, which is attached to a network-based local mobility domain to perform communication using network prefixes allocated from the local mobility domain, the mobile terminal comprising:
use of network prefix optimization detecting means for detecting a state in which a network prefix necessary for the mobile terminal to perform communication is allocated to the mobile terminal; and
notification means for notifying the local mobility domain of prefix preference information including information for achieving a state in which the network prefix detected by the use of network prefix optimization detecting means and necessary for the mobile terminal is allocated.
According to this configuration, when a mobile terminal having multiple access technologies moves within the mobility management domain of a local network, management is so performed that prefixes necessary for the mobile terminal can be allocated, thereby minimizing the number of prefixes to be allocated to the mobile terminal.

Further, in order to attain the above objects, there is provided a prefix allocation administration device of the present invention, which manages the allocation of a network prefix to a mobile terminal attached to a network-based local mobility domain, the prefix allocation administration device comprising:
prefix correspondence maintaining means for managing the allocation of a network prefix to the mobile terminal to maintain a correspondence between the network prefix allocated to the mobile terminal and the mobile terminal; and
prefix management means which, when receiving, from the mobile terminal, prefix preference information including information for achieving a state in which a network prefix necessary for the mobile terminal is allocated, changes the correspondence between the network prefix allocated to the mobile terminal and the mobile terminal based on the prefix preference information.
According to this configuration, when a mobile terminal having multiple access technologies moves within the mobility management domain of a local network, management is so performed that prefixes necessary for the mobile terminal can be allocated, thereby minimizing the number of prefixes to be allocated to the mobile terminal.

The present invention has the above-mentioned configurations. When a mobile terminal having multiple access technologies moves within the mobility management domain of a local network, the present invention has the advantage of minimizing the number of prefixes to be allocated to the mobile terminal and hence making efficient use of prefixes.

### BRIEF DESCRIPTION OF THE DRAWINGS

[FIG. 1] It is a sequence chart showing an example operation in an embodiment of the present invention.
[FIG. 2] It is a diagram showing an example of a preferred functional architecture of a mobile node in the embodiment of the present invention.
[FIG. 3A] It is a sequence chart showing an example operation of Reduce Prefix Mode in the embodiment of the present invention.
[FIG. 3B] It is a sequence chart showing an example operation of Reduce Prefix Mode in the embodiment of the present invention when an extra prefix has occurred due to shut-down of a network interface.
[FIG. 4A] It is a sequence chart showing an example operation of Reuse Prefix Mode in the embodiment of the present invention.
[FIG. 4B] It is a sequence chart showing an example operation of Reuse Prefix Mode in the embodiment of the present invention when two or more prefixes are allocated to one network interface and another network interface is activated.
[FIG. 5A] It is a sequence chart showing an example operation of Recycle Prefix Mode in the embodiment of the present invention.
[FIG. 5B] It is a sequence chart showing another example operation of Recycle Prefix Mode in the embodiment of the present invention.
[FIG. 6A] It is a diagram showing an example of a system configuration in the embodiment of the present invention.
[FIG. 6B] It is a sequence chart showing an example operation in FIG. 6A.
[FIG. 7A] It is a diagram showing an example of a conventional network configuration.
[FIG. 7B] It is a diagram showing a state in which a mobile node moves from the state of FIG. 7A and the connection of IF2 is shut down.
[FIG. 7C] It is a sequence chart showing another example operation of Reuse Prefix Mode in the embodiment of the present invention.
[FIG. 8A] It is a diagram showing an example of a network configuration including a network entity associated with the operation of an extended prefix reuse method according to the present invention.
[FIG. 8B] It is a sequence chart showing an example operation of extended Reuse Prefix Mode in the embodiment of the present invention.
[FIG. 8C] It is a sequence chart showing another example operation of extended Reuse Prefix Mode in the embodiment of the present invention.
[FIG. 9] It is a diagram showing an example of a network configuration when two or more APNs are associated with a single LMA in the embodiment of the present invention.
[FIG. 10] It is a flowchart showing an example of the operation of extended Reuse Prefix Mode performed by a mobile node in the embodiment of the present invention.
[FIG. 11] It is a diagram showing the configuration of a MAG in the embodiment of the present invention.
[FIG. 12] It is a sequence chart showing still another example operation of extended Reuse Prefix Mode in the embodiment of the present invention.
[FIG. 13] It is a diagram showing an example of a message structure including a prefix preference message in the embodiment of the present invention.

### DESCRIPTION OF EMBODIMENTS

An embodiment of the present invention will now be described.

As mentioned above, the present invention is to address the problem that network prefixes allocated to a mobile node attached to a mobility management domain continue to be maintained, resulting in a profligate of network resources (especially prefixes). Such a problem arises, for example, in the following configuration and operation.

For example, suppose that a mobile node having a UMTS interface and an 802.11 interface is moving within a network-based local mobility management domain (e.g., NetLMM domain). In this specification, network-based mobility management domains including NetLMM domain and PMIP domain are called mobility management domains. The mobile node is first given a first prefix for the UMTS interface. When entering a WiFi hotspot, the mobile node activates its 802.11 interface, and a second prefix is allocated to the 802.11 interface. Since the network prefixes must be maintained as long as the mobile node is attached to the mobility management domain, if the mobile node has left the WiFi hotspot, the second prefix is transferred to the UMTS interface, for example. As a result, both prefixes (first and second prefixes) are detected on the UMTS interface.

Then, when the mobile node has entered another WiFi hotspot, a third prefix is given to the 802.11 interface. Further, when the mobile node has left the hotspot, the third prefix is transferred to the UMTS interface of the mobile node. As a result, three prefixes exist on the UMTS interface. This processing is repeated each time the mobile node enters another hotspot, and the mobile node ends up accumulating many prefixes on the UMTS interface.

It is apparent that network resources (especially network prefix resources) could be used in vain. First, the mobile node may neither need nor use so many prefixes. Secondly, if the mobile node is a mobile IPv6 node, the mobile node may try to associate a care-of address, configured from each of these prefixes using mobile IPv6, with a home address (which may be configured from one of these prefixes). However, when the mobile node is attached to the mobility management domain, all the prefixes do not need maintaining. Thirdly, when a node having plural interfaces is given plural prefixes more in number than the number of interfaces, the node soon runs out of resources of network prefixes available in the mobility management domain, and the mobility management domain may not be able to permit further connections of the mobile node.

In the present invention, network prefixes allocated to a mobile node attached to a network-based local mobility management domain (mobility management domain) are managed so that only the network prefixes necessary for the mobile node to perform communication are allocated to the mobile node efficiently to minimize the allocation of prefixes to the mobile terminal while maintaining the prefixes in such a manner to enable efficient use of the prefixes. The network prefixes necessary for the mobile node to perform communication include, in addition to the prefixes being used by the mobile node for current communication, redundant prefixes held on purpose as backup or the like though not being currently used. On the other hand, the network prefixes unnecessary for the mobile node to perform communication are prefixes other than the above-mentioned prefixes, meaning that the mobile node never uses the prefixes for any purposes. The present invention aims to allocate the minimum number of network prefixes necessary for the mobile node to perform communication wherever possible, but the determination of what is the necessary minimum may not be always able to be made accurately by the network entity alone or the mobile node alone (or only at a time point during communication) (for example, it may not be the minimum from the standpoint of another entity or later). Therefore, in the method of the present invention, not only the conclusive determination but also the transmission and reception of preferences based on the determination are mainly employed. In other words, it can be considered that a request message from the mobile node is rejected due to a difference in determination between the mobile node and the network entity, the mobile node resends a different request message in response to processing on the network side, and so on. However, since such operations are within the bounds of handling communication error cases, the description of such operations will be omitted below for the sake of simplification.

This management of network prefix allocation can be done by processing mainly on the side of the mobility management domain, or by the mobile node notifying the mobility management domain thereof.

When the mobility management domain side mainly performs management, the present invention can be implemented in such a manner that, for example, a network node (e.g., LMA) in the mobility management domain monitors a packet flow of each prefix allocated to the mobile node. In this method, the LMA monitors the prefix of an address used for the packets, and if there is no packet sent and received in association with a certain prefix after a given time period has elapsed, the LMA determines that the prefix may be deleted. Thus, the mobility management domain side can determine prefixes disused by the mobile node so that management will be done to allocate prefixes necessary for the mobile node and not to maintain a state where network prefixes unnecessary for the mobile node are allocated to the mobile node.

The present invention can also be implemented by policy control on the side of the mobility management domain. For example, a policy to limit the number of prefixes to be allocated to the network interfaces of the mobile node is set to limit the number of prefixes to be allocated to each network interface in order to enable management not to allocate too many prefixes to the mobile node. However, since the mobility management domain needs to maintain the continuity of prefixes for the mobile node moving within the mobility management domain, conditions under which a number of prefixes that exceeds the limit are allocated to the mobile node could occur depending on the state of communication of the mobile node moving within the mobility management domain. In this case, for example, it is desired that the mobile node and the mobility management domain should agree on a policy used to manage the continuity of prefixes or negotiate about deletable prefixes according to the circumstances.

On the other hand, when the mobile node notifies the mobility management domain to manage the allocation of network prefixes, the mobile node detects a state where network prefixes necessary for communication are allocated (i.e., a state where unnecessary network prefixes are not allocated), and notifies the mobility management domain of information for achieving this state (prefix preference information to be described later).

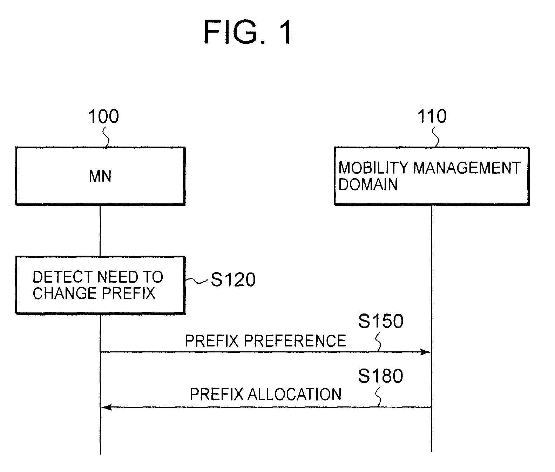

For example, a mobile node (MN) 100 is moving within a mobility management domain 110 in FIG. 1. First in step S120, the MN 100 detects that the allocation of prefixes is to be changed soon (i.e., that a prefix(es) needs changing), and in step S150, the MN 100 sends a signal (prefix preference) for notifying the mobility management domain 110 of prefix allocation preference. At this time, the mobility management domain 110 may respond by actually allocating a prefix(es) in step S180 according to the prefix preference.

In step S120 mentioned above, the MN 100 can use various methods to detect that the allocation of prefixes is to be changed soon. For example, as a preferred method of detecting a change in allocation of prefixes, a method of detecting on/off of network interfaces of the MN 100 may be employed. When the number of connected network interfaces of the MN 100 has been changed, the prefixes to be allocated to the MN 100 could be changed. For example, a newly connected network interface (i.e., a network interface turned on) may receive a new prefix, or a prefix allocated to a network interface that is turned off may be reallocated to another connection interface of the MN 100.

Further, the signal indicating the prefix preference and sent from the MN 100 in step S150 can take various forms.

For example, as a preferred form of the prefix preference, the MN 100 may make a request that the number of prefixes to be allocated to the network interface be reduced. The operation in this case will be described later as Reduce Prefix Mode.

As another preferred form of the prefix preference, for example, the MN 100 may make a request that a prefix allocated to one of the network interfaces be reallocated to another network interface. The operation in this case will be described later as Reuse Prefix Mode.

As still another form of the prefix preference, for example, the MN 100 may make a request that a prefix be recycled to another mobile node within the mobility management domain 110. The operation in this case will be described later as Recycle Prefix Mode.

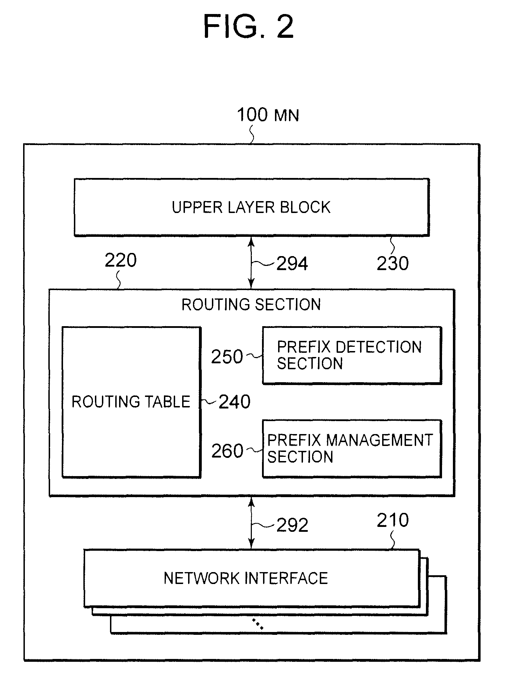

Next, the functional architecture of a device for implementing the present invention will be described. FIG. 2 shows an example of a preferred functional architecture of the mobile node in an embodiment of the present invention. The MN 100 shown in FIG. 2 has one or plural network interfaces 210 for sending and receiving packets, a routing section 220 for make decisions on programs in the MN 100 (e.g., programs included in an upper layer block 230) and packet forwarding to a preferred network interface 210, and the upper layer block 230 containing all protocols and programs located above a network layer. In the following, the one or plural network interfaces 210 are represented as a network interface 210, and one of the plural network interfaces 210 is represented as a network interface 210-n.

Each network interface 210 is a functional block including all hardware and software necessary for the MN 100 to communicate with another node through any communication medium. Using terminology known among relevant technologies, the network interface 210 represents a communication component, firmware, driver and communication protocol of layer 1 (physical layer) and layer 2 (data link layer). Note that the MN 100 may have one or plural network interfaces.

The routing section 220 has the function of deciding on packet delivery to an appropriate network interface 210 for sending an appropriate program or packet existing in the upper layer block 230. Using terminology known in the relevant art, the routing section 220 represents that layer 3 (network layer) protocol such as IPv4 or IPv6 is implemented.

The routing section 220 can send and receive packets to and from an appropriate network interface 210 through a signal/data path 292. Similarly, the routing section 220 can send and receive packets to and from an appropriate program in the upper layer block 230 through a signal/data path 294.

The upper layer block 230 is a functional block containing all protocols and programs located above the network layer in a communication protocol stack. Contained in the upper layer block 230 are any transport layer protocol or session layer protocol such as TCP (Transmission Control Protocol), SCTP (Stream Control Transport Protocol), UDP (User Datagram Protocol) or the like, and programs and software necessary to communicate with other nodes. As mentioned above, the upper layer block 230 can send and receive packets to and from the routing section 220 through the signal/data path 294.

The routing section 220 includes a routing table 240, a prefix detection section 250 and a prefix management section 260. The prefix detection section 250 and the prefix management section 260 are major additional functions of the present invention.

The routing table 240 includes routing entries, and each of these routing entries presents, to the routing section 220, a packet delivery method (e.g., as to from which network interface 210 a packet should be forwarded) based on the parameters of the packet (e.g., the source address and destination address of the packet).

The prefix detection section 250 has the function of detecting a change in prefix allocation to the MN 100. The detection of a change in prefix allocation by means of the prefix detection section 250 can be done, for example, by detecting the time when the network interface 210 is turned off, when the network interface 210 is activated, or when a signal indicating that the prefix is unnecessary is sent from the upper layer block 230, but it is not limited thereto, and any other method of detecting a change in prefix allocation can be employed.

The prefix management section 260 has the function of managing prefixes allocated to each network interface 210 and sending the prefix preference to the mobility management domain 110 if necessary. As mentioned above, the prefix preference of the MN 100 to be notified from the prefix management section 260 to the mobility management domain 110 contains a different request depending on each of plural appropriate modes.

The prefix detection section 250 can detect a state where a minimum number of network prefixes necessary for the MN 100 to perform communication are allocated to the MN 100 (or detect network prefixes unnecessary for the MN 100), and the prefix management section 260 can notify the mobility management domain 110 of prefix preference information for achieving the state where the minimum number of network prefixes necessary for the MN 100 are allocated (or the state where the network prefixes unnecessary for the MN 100 are deleted).

For example, in Reduce Prefix Mode to be described later, the prefix detection section 250 detects prefixes no longer required for communication of the MN 100 (i.e., it detects that unnecessary prefixes are reduced to achieve the state where the necessary minimum number of network prefixes are allocated), and the prefix management section 260 sends the mobility management domain 110 of prefix preference information requesting it to delete the unnecessary network prefixes from those to be allocated to the MN 100.

Further, in Reuse Prefix Mode to be described later, the prefix detection section 250 detects that prefixes already allocated to one (first network interface) of the plural network interfaces 210 of the MN 100 are reusable on another network interface 210 (second network interface) (i.e., it detects that the prefixes are reused on the other network interface 210 to achieve the state where the necessary minimum number of prefixes are allocated), and the prefix management section 260 sends the mobility management domain 110 prefix preference information requesting it to allocate the reusable network prefixes to the other network interface (second network interface).

Further, in Recycle Prefix Mode to be described later, the prefix detection section 250 detects that prefixes to be allocated to the MN 100 are prefixes temporarily used (i.e., it detects that the prefixes are temporarily allocated to achieve the state where the necessary minimum number of prefixes are allocated), and the prefix management section 260 sends the mobility management domain 110 prefix preference information indicating that the prefixes to be allocated to the MN 100 are temporarily used.

The prefix detection section 250 and the prefix management section 260 may be operated in one of Reduce Prefix Mode, Reuse Prefix Mode and Recycle Prefix Mode, or in two or more (or all) modes. Further, for example, the prefix detection section 250 may have a mode determination section for determining which of the above-mentioned modes is appropriate for a certain prefix in order to use each mode for each prefix. The mode determination section can sort out a prefix to which none of the above-mentioned modes is applied so as not to perform normal prefix allocation processing on this prefix.

The following describes each mode in detail.

### <Reduce Prefix Mode>

For example, in the first appropriate mode, the MN 100 may request reduction of the number of prefixes allocated to a network interface 210. In this specification, this first appropriate mode is called Reduce Prefix Mode.

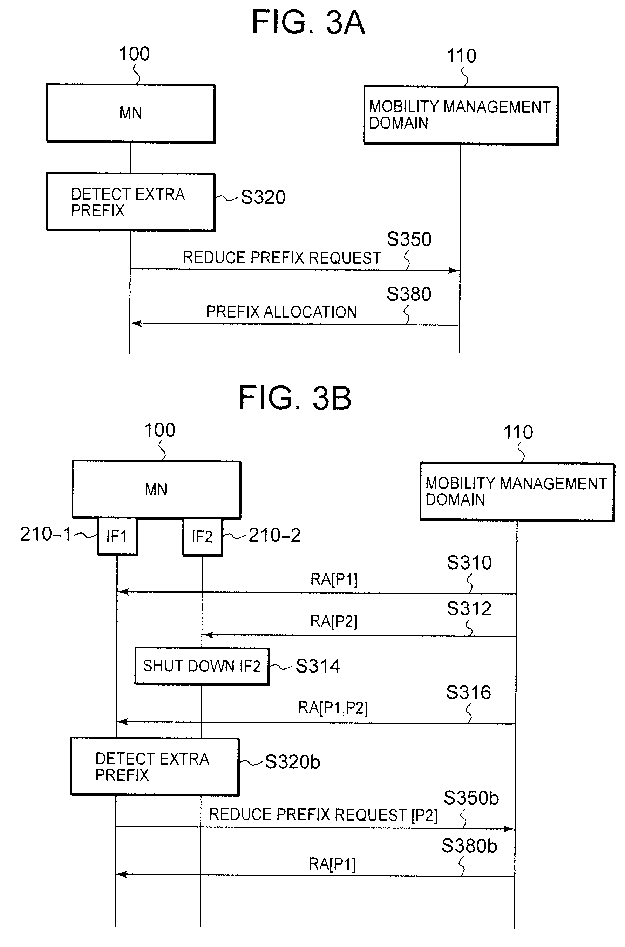

FIG. 3A shows an example operation of Reduce Prefix Mode in the embodiment of the present invention. In FIG. 3A, the MN 100 detects in step S320 that extra prefixes (prefixes not in use) are allocated to an unused network interface 210, and sends a reduce prefix request to the mobility management domain 110 in step S350.

The reduce prefix request sent in step S350 of FIG. 3A is a specific form of the prefix preference (sent in step S150) shown in FIG. 1, which is prefix preference indicating a request for releasing one or more prefixes allocated. It is desired that the reduce prefix request include information indicating a specific prefix to be released.

When the mobility management domain 110 agrees to this reduce prefix request, new prefix allocation according to the reduce prefix request is notified in step S380 through a prefix allocation message. Specifically, for example, the MN 100 is notified through the prefix allocation message that the specific prefix to be released is released. This notification may be made by giving notice of the prefix in such a state that the life time of the prefix to be released is set to 0, or by giving notice of remaining prefixes in such a state that the prefix to be released is deleted.

There are many conditions under which the prefix detection section 250 detects that extra prefixes are allocated. For example, the time when the upper layer block 230 no longer use one of the prefixes currently held (e.g., when a session using a prefix is ended or when the MN 100 sends a binding update to a home agent in mobile IP so that a care-of address configured by a prefix will be no longer used) may be used as a condition under which an extra prefix occurs.

Further, for example, the time when the mobile node shuts down one or more network interfaces 210 may be used as a condition under which prefixes allocated to the network interfaces 210 become extra prefixes. In any session related to communication of the MN 100, if an address configured from a prefix is not used, the MN 100 may send the mobility management domain 110 a reduce prefix request indicative of the deletion of allocation of this extra prefix. FIG. 3B shows an example in which an extra prefix has occurred due to shut-down of a network interface 210.

In FIG. 3B, the MN 100 has a network interface 210-1 (IF1) and a network interface 210-2 (IF2). As indicated by a RA (Router Advertisement) message in step S310, prefix P1 is first allocated to the IF1, and as indicated by a RA message in step S312, prefix P2 is first allocated to the IF2.

In step S314, when the MN 100 shuts down the IF2, the mobility management domain 110 reallocates prefix P2 to the IF1 as indicated by a RA message in step S316. As a result, two prefixes P1 and P2 are allocated to the IF1 of the MN 100. This operation is a basic function of the mobility management domain 110 to maintain the continuity of prefixes when the MN 100 moves within the mobility management domain 110.

Here, if the MN 100 has not actually used an address configured from prefix P2, the prefix detection section 250 of the MN 100 detects that an extra prefix (namely, prefix P2) is allocated as shown in step S320b. As a result, in step S350b, the prefix management section 260 of the MN 100 sends the mobility management domain 110 a reduce prefix request requesting deletion of prefix P2 from the prefixes allocated to the MN 100.

If the reduce prefix request sent in step S350b is agreeable, the mobility management domain 110 notifies, in step S380b, the MN 100 of a new router advertisement message indicating that prefix P2 is not allocated to the IF1. As a result, prefix P2 is deleted and only prefix P1 is allocated to the IF1 of the MN 100.

Thus, the MN 100 presents to the mobility management domain 110 that the extra prefix is not needed, so that the mobility management domain 110 can delete the extra prefix from allocation of prefixes to the MN 100, saving network resources (prefix resources). As discussed above, the above-mentioned Reduce Prefix Mode in the embodiment of the present invention can attain the object of the present invention.

The reduce prefix request message may also be used, for example, when the MN 100 performs a handover from a 3GPP access network to a non-3GPP access network such as WLAN. When establishing a connection to a 3GPP core network via a 3GPP access network (such as LTE or UMTS) depending on the spread of 3GPP access networks, the MN 100 can hold plural prefixes (each prefix is linked to a corresponding PDN connection), while when establishing a connection to a 3GPP core network via a non-3GPP access network (WLAN or the like), the MN 100 can generate only one PDN connection. In light of this situation, the prefix detection section 250 may detect the need to reduce prefixes. In this case, the MN 100 may reduce the number of prefixes acquired via the 3GPP access network into one prior to the handover (vertical handover) from the 3GPP access network to the non-3GPP access network so that the remaining prefixes can be handed over to the non-3GPP access network. In other words, any prefix required by the MN 100 can be handed over correctly without selecting a prefix (corresponding to a PDN connection) to be handed over at the discretion of the network system, improving convenience of users.

### <Reuse Prefix Mode>

Further, for example, in the second appropriate mode, the MN 100 may request reallocation of a prefix allocated to one of the network interfaces 210 to another network interface 210 of the MN 100. In this specification, this second appropriate mode is called Reuse Prefix Mode.

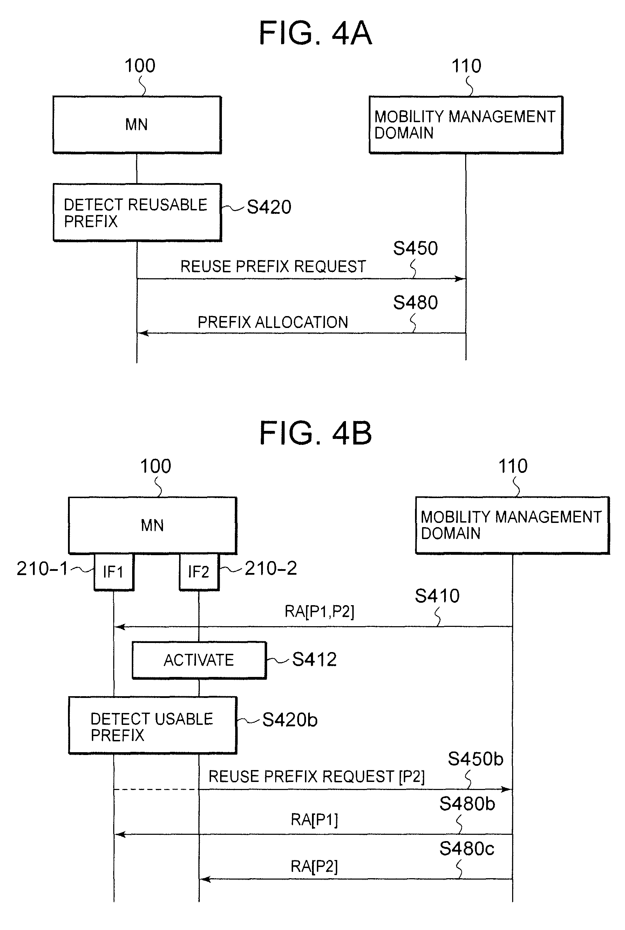

FIG. 4A shows an example operation of Reuse Prefix Mode in the embodiment of the present invention. In FIG. 4A, the MN 100 detects in step S420 that one or more prefixes can be reused on another network interface 210, and in step S450, sends a reuse prefix request to the mobility management domain 110.

The reuse prefix request sent in step S450 of FIG. 4A is a specific form of the prefix preference (sent in step S150) shown in FIG. 1, which is prefix preference indicating a request for reusing one or more prefixes, allocated to a network interface 210, on another network interface 210. It is desired that the reuse prefix request include information indicating a specific prefix to be reused.

When the mobility management domain 110 agrees to this reuse prefix request, new prefix allocation corresponding to the reuse prefix request is notified in step S480 to the MN 100 through a prefix allocation message. Specifically, for example, the MN 100 is notified through the prefix allocation message that the specific prefix to be reused is reused on the other network interface 210.

There are many conditions under which the prefix detection section 250 detects that the prefix is reusable. For example, on condition that plural prefixes are allocated to one network interface 210 (e.g., network interface 210-x) and another network interface 210 (e.g., network interface 210-y) is about to be activated, a condition that one of the plural prefixes allocated to the network interface 210-x can be moved to the network interface 210-y may be used as a condition that the prefix is reusable. FIG. 4B shows an example in which plural prefixes are thus allocated to one network interface 210-1 and another network interface 210-2 is activated.

In FIG. 4B, the MN 100 has a network interface 210-1 (IF1) and a network interface 210-2 (IF2). As indicated by a RA message in step S410, two prefixes P1 and P2 are first allocated to the IF1.

In step S412, when the MN 100 activates the IF2, the prefix detection section 250 of the MN 100 detects that prefixes of the IF1 are usable on the IF2. As a result, in step S450b, the prefix management section 260 of the MN 100 sends the mobility management domain 110 a reuse prefix request requesting reuse of prefix P2, allocated to the IF1, on the IF2. Since there are two active network interfaces (the IF1 and the IF2), the reuse prefix request sent in step S450b may be sent from either of the IF1 and the IF2.

If the reuse prefix request sent in step S450b is agreeable, the mobility management domain 110 reallocates the prefixes. For example, as shown in FIG. 4B, this reallocation of prefixes is such that only prefix P1 is allocated to the IF1 through a RA message sent in step S480b and prefix P2 is allocated to the IF2 through a RA message sent in step S480c.

Thus, the MN 100 presents to the mobility management domain 110 that the prefix previously allocated may be used on another network interface 210, so that the mobility management domain 110 can allocate the prefix to the new network interface 210 without using a resource for the new prefix. As discussed above, the above-mentioned Reuse Prefix Mode in the embodiment of the present invention can attain the object of the present invention.

The reuse prefix request message may also be used, for example, when the MN 100 performs a handover from a 3GPP access network to a non-3GPP access network such as WLAN. When establishing a connection to a 3GPP core network via a 3GPP access network (such as LTE or UMTS) depending on the spread of 3GPP access networks, the MN 100 can hold multiple prefixes (each prefix is linked to a corresponding PDN connection), while when establishing a connection to a 3GPP core network via a non-3GPP access network (WLAN or the like), the MN 100 can generate only one PDN connection. In light of this situation, the prefix detection section 250 may detect the need to reuse prefixes. In this case, the MN 100 may send a reuse prefix message via a non-3GPP access network when being connected to the non-3GPP access network, and this enables the MN 100 to notify the network which prefix among the prefixes held when establishing a connection via the 3GPP access network is to be reused (i.e., which prefix the MN 100 desires to reuse). Thus, the MN 100 can hand over a desired PDN connection to the non-3GPP access network, preventing the network system from selecting a PDN connection to be handed over at its discretion (unintended by the MN 100). Therefore, upon handover to a non-3GPP access network, a PDN connection (corresponding to a prefix) necessary for an application, for example, can be selected correctly, improving convenience of users.

### <Recycle Prefix Mode>

Further, for example, in the third appropriate mode, the MN 100 may be able to agree that a prefix allocated to the MN 100 is used by another MN 100 within the mobility management domain 110. In this specification, this third appropriate mode is called Recycle Prefix Mode.

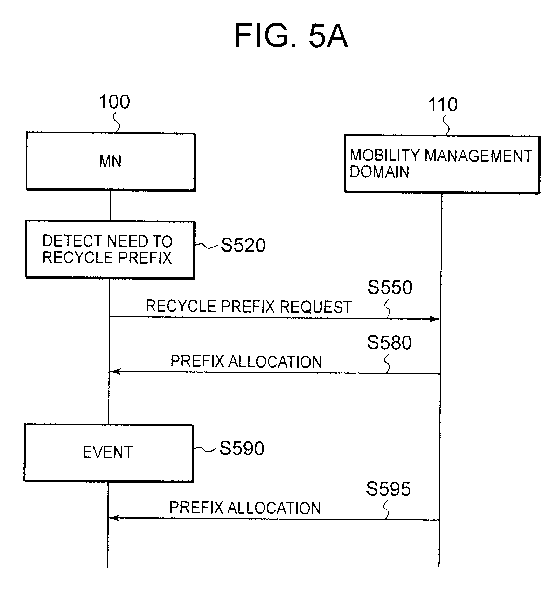

FIG. 5A shows an example operation of Recycle Prefix Mode in the embodiment of the present invention. In FIG. 5A, the MN 100 detects in step S520 the need to allocate a prefix in Recycle Prefix Mode, and in step S550, sends a recycle prefix request to the mobility management domain 110.

The need to allocate a prefix in the recycle mode means that, for example, the MN 100 uses the prefix temporarily, and when the MN 100 has done with the prefix, the prefix may be used by another MN 100 because of no need to maintain the continuity of the prefix (i.e., the prefix does not need to remain as the prefix allocated to the MN 100). Therefore, the prefix allocated in this Recycle Prefix Mode is recycled to another MN 100 without maintaining the continuity of the prefix for the MN 100.

The recycle prefix request sent in step S550 of FIG. 5A is a specific form of the prefix preference (sent in step S150) shown in FIG. 1, which is prefix preference requesting allocation of one or more prefixes in Recycle Prefix Mode.

The mobility management domain 110 can grasp the timing of collecting a prefix, which has been allocated to the MN 100, in Recycle Prefix Mode according to the type of prefix to be allocated in Recycle Prefix Mode (e.g., immediately after an even has occurred in step S590 to be described later). However, to grasp the timing more reliably, the MN 100 may include, in the recycle prefix request, the intended purpose of the prefix requested in Recycle Prefix Mode (or information indicating in which event the prefix is returned). Further, using a method to be described later, the mobility management domain 110 may first allocate prefixes of all types (intended purposes) allocatable to the MN 100 so that the MN 100 will sort out necessary prefixes. Thus, the intended purpose or type of prefix used by the MN 100 is identified, and this enables the mobility management domain 110 to grasp the timing of collecting, in Recycle Prefix Mode, the prefix allocated to the MN 100. The timing of the prefix allocated to the MN 100 and collectable in Recycle Prefix Mode (timing at which the MN 100 has done with the prefix) may be notified from the MN 100 to the mobility management domain 110.

When the mobility management domain 110 agrees to this recycle prefix request, new prefix allocation corresponding to the recycle prefix request is notified in step S580 to the MN 100 through a prefix allocation message. Specifically, for example, the MN 100 is notified through the prefix allocation message that the prefix is allocated in Recycle Prefix Mode.

When the prefix is allocated to the MN 100 in Recycle Prefix Mode, if any event occurs in step S590, the mobility management domain 110 sends in step S595 a prefix allocation message to the MN 100 to enable deletion of the prefix to be recycled so that the prefix will become usable to another MN 100 (to make the prefix usable to another MN 100 later). However, the prefix may not be decided to be used by an MN 100 other than the former MN 100 at the time when the allocation of the prefix to be recycled is deleted, and it could be that this prefix is allocated when the former MN 100 requests a new prefix eventually (which leads to the result almost equivalent to the case of using Recycle Prefix Mode).

An example of prefix allocation in Recycle Prefix Mode is a case where the MN 100 is a mobile IPv6 node. In this case, the MN 100 may use the allocated prefix (first prefix) as its home prefix, and associate a care-of address configured from a separately allocated prefix (second prefix) or the second prefix itself with the home address of the MN 100 (an address configured from the home prefix) or the home prefix. In this case, since the second prefix is used only to configure the care-of address, there is no need to maintain the continuity of the second prefix. Therefore, the MN 100 can request the second prefix to be allocated in Recycle Prefix Mode.

At this time, for example, if the mobility management domain 110 runs out of prefix resources, the allocation of the second prefix to the MN 100 may be deleted, or if the MN 100 shuts down a network interface to which the second prefix is allocated, the second prefix may be released to the mobility management domain 110. Even if prefix allocation is pre-allocated in the recycle mode, reuse of the address may be desired. In such a case, a reuse prefix request for a corresponding prefix may be sent along the way (or upon changing prefix/network interfaces). When the prefix becomes usable in Recycle Prefix Mode, the subsequent operation is equivalent to the operation of Reuse Prefix Mode. One different point from Reduce Prefix Mode is that the MN 100 clearly expresses that there is no need to maintain a target prefix on the network side and this allows for further reduction of processing required to perform management on the network side.

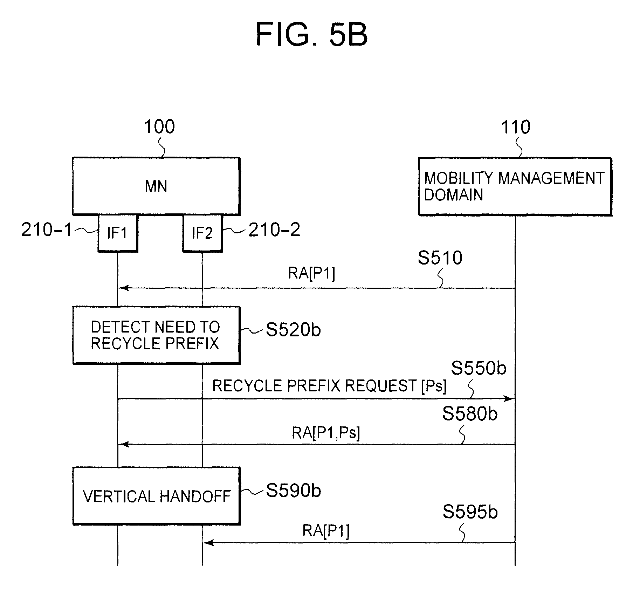

FIG. 5B shows another example operation of prefix allocation in the recycle mode in the embodiment of the present invention. In FIG. 5B, the MN 100 has a network interface 210-1 (3GPP interface IF1) and a network interface 210-2 (non-3GPP interface IF2). As indicated by a RA message in step S510, prefix P1 is first allocated to the IF1 and the IF2 is first shut down.

Here, suppose that the MN 100 has decided to access a 3GPP-specific service. In this case, the MN 100 needs to be allocated a 3GPP-specific prefix (e.g., a prefix handed over from the 3GPP operator). At this time, since this 3GPP-specific prefix is used only to access the 3GPP-specific service, the prefix detection section 250 of the MN 100 detects in step S520b the need of prefix allocation in Recycle Prefix Mode. As a result, the prefix management section 260 of the MN 100 sends the MN 100 a recycle prefix request requesting prefix allocation in Recycle Prefix Mode.

When the mobility management domain 110 agrees to this recycle prefix request, 3GPP-specific prefix Ps is allocated in step S580b to the IF1 of the MN 100 through a RA message in addition to prefix P1 allocated to the IF1 from the beginning.

Here, in step S590b, the MN 100 tries to perform a vertical handoff from the IF1 to the IF2 or the like (corresponding to the occurrence of an event in step S590 of FIG. 5A). Since the IF2 is a non-3GPP interface, if the access to the 3GPP-specific service is stopped by this vertical handoff, 3GPP-specific prefix Ps also becomes unnecessary. Since 3GPP-specific prefix Ps is allocated to the IF1 in Recycle Prefix Mode, the continuity thereof is not maintained in the vertical handoff. As a result, in step S595b, only prefix P1 is allocated to the IF2 through a RA message after the vertical handoff.

Although in the example shown in FIG. 5A and FIG. 5B, a case where the recycle prefix request is made for the newly allocated prefix is illustrated, the recycle prefix request may also be used for a prefix already held by the MN 100. In this case, it is desired that the recycle prefix request include information indicating a specific prefix as a target in Recycle Prefix Mode.

Thus, the MN 100 presents to the mobility management domain 110 that if the allocated prefix does not need using, the prefix may be deleted so that the prefix will become usable to another MN 100 (i.e., the prefix may be recycled to another MN 100), and this enables the mobility management domain 110 to allocate the prefix to the MN 100 efficiently, saving network resources (prefix resources). As discussed above, the above-mentioned Recycle Prefix Mode in the embodiment of the present invention can attain the object of the present invention.

Further, a condition under which the MN 100 applies selective IP traffic offload for offloading part or all of traffic from a MAG or access network (namely a node different from the MAG) to a destination node without passing through a LMA in a PMIP domain (namely a 3GPP core network or operator's core network domain) may be used as a condition for Recycle Prefix Mode. When a specific prefix is allocate for the purpose of selective IP traffic offload, the handover makes it difficult to continue the session using the prefix. In such a case, the MN 100 may just request the recycle mode for the prefix, or if the MN 100 requests a prefix in the recycle mode, the network may allocate a prefix for selective IP traffic offload.

Further, for example, the recycle prefix request message may be used when the MN 100 performs a handover from a 3GPP access network to a non-3GPP access network such as WLAN. When establishing a connection to a 3GPP core network via a 3GPP access network (such as LTE or UMTS) depending on the spread of 3GPP access networks, the MN 100 can hold plural prefixes (each prefix is linked to a corresponding PDN connection), while when establishing a connection to a 3GPP core network via a non-3GPP access network (WLAN or the like), the MN 100 can generate only one PDN connection. In light of this situation, the prefix detection section 250 may detect the need to recycle prefixes.

In this case, the MN 100 can use a recycle prefix request message to notify the network of which prefix among prefixes acquired in the 3GPP access network is to enter the recycle mode. As mentioned above, since the prefix in the recycle mode may not be managed by the network during vertical handover processing, if there is only one prefix specified for the recycle mode among the prefixes contained in the MN 100, the MN 100 can be sure that the prefix is to hand over to the non-3GPP access network. Thus, the MN 100 can hand over a desired PDN connection to the non-3GPP access network, preventing the network system from selecting a PDN connection to be handed over at its discretion (unintended by the MN 100). Therefore, upon handover to a non-3GPP access network, a PDN connection (corresponding to a prefix) necessary for an application, for example, can be selected correctly, improving convenience of users.

In the aforementioned embodiment of the present invention, the actual message format of the prefix preference such as the reduce prefix request (Reduce Prefix Mode), the reuse prefix request (Reuse Prefix Mode) or the recycle prefix request (Recycle Prefix Mode) is not described, but those skilled in the art will appreciate that this prefix preference can be sent in any format.

For example, the prefix preference may be fulfilled based on a special option inserted into an Internet Control Message Protocol (ICMP) Neighbor Discovery (ND) message (e.g., a Neighbor Advertisement message or a Router Solicitation message) sent to an access router of the mobility management domain 110.

The prefix preference may also be inserted into a Dynamic Host Configuration Protocol (DHCP) message sent to a DHCP relay device or a DHCP server within the mobility management domain 110. This is useful in a case, for example, where the mobility management domain 110 allocates a prefix to a mobile node using DHCP.

Further, the prefix preference may be inserted into an Authentication, Authorization and Accounting (AAA) signaling message executed between the MN 100 and the mobility management domain 110. For example, any authentication protocol such as DIAMETER or RADIUS may be so extended that the prefix preference will be inserted into a signaling message. This is useful in a case, for example, where the prefix preference is sent upon activation of a network interface. Since the AAA signaling message is generally sent through the first few messages immediately after the network interface is activated, the prefix preference can be added to the AAA message to reduce unneeded overhead and processing delay.

Further, the prefix preference may be inserted into a 3GPP signaling message in a frame of layer 2 connection establishment signaling (e.g., between the MN 100 and an evolved NodeB (eNodeB)), or a setup message for point-to-point protocol (PPP) or Extended Authentication Protocol (EAP) between the MN 100 and an evolved Packet Data Gateway (ePDG). This is also useful in sending the prefix preference when the layer 2 connection establishment signaling is performed upon activation or shutdown of a network interface.

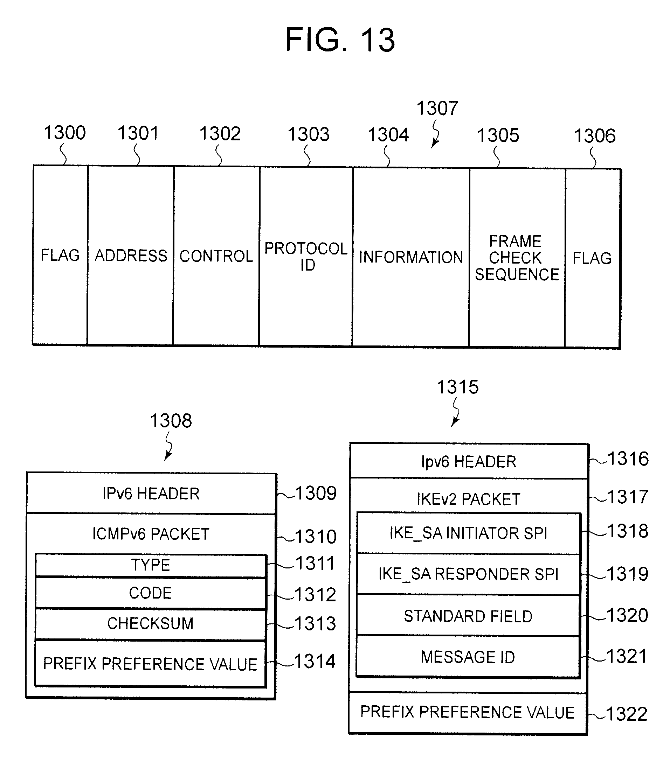

FIG. 13 shows an example of the message structure of a prefix preference message 150 in the embodiment of the present invention.

Shown in FIG. 13 is the message structure of a packet 1308 carrying the prefix preference message and implemented as an ICMPv6 header. The prefix preference message may also be implemented by a new type of ICMPv6 or existing type having a new code value.

The first field of the packet 1308 indicates an IPv6 header 1309. A source address field of the IPv6 header 1309 is an IPv6 address associated with an interface from which the mobile node sends the prefix preference message, and a destination address field is an IPv6 address of a MAG.

In the following ICMPv6 packet 1310, there is a field 1311 including type information (type value). If a new ICMPv6 message is used, prefix preference information with a new type value set may be sent. The structure of the ICMPv6 message depends on the type value used in the field 1311 including the type information.

Then, there is a field 1312 including a code value. This may be such that an existing value is used as the type value and the code value indicates that the prefix preference is included. In other words, the code value may indicate a difference in message information. For example, when the prefix preference message is sent with Router Solicitation (RS) of Neighbor Discovery signaling, a new code value indicative of the prefix preference message may be used in the field 1312 including the code value.

This is followed by a checksum field 1313 for detecting falsification of packet data. Further, in the packet 1308 including the prefix preference message, a prefix preference value field 1314 into which information necessary for the prefix preference message according to the present invention is inserted (e.g., a prefix to be reused, a prefix to be deleted, a prefix to be recycled or the like) is included.

The prefix preference message may be implemented with an IKEv2 initiation message (or any other IKEv2 message). In general, the IKEv2 initiation message is used for an agreement on the encryption algorithm, nonce value exchange, Diffie-Hellman key exchange with a peer (correspondent) or the like, commonly having an IKEv2 header part and one or more IKEv2 payload parts.

When the IKEv2 initiation message is used for transmission of the prefix preference message, a new IKEv2 payload for carrying prefix preference information is added as well as a standard IKEv2 initiation message having, for example, an existing payload. Further, when the existing IKEv2 payload type is used for transmission of the prefix preference information, a new flag indicating that the existing type of additional payload is embedded in the IKEv2 initiation message is used in the IKEv2 header part.

It will be apparent to those skilled in the art that there are many methods of embedding a new prefix preference message in the IKEv2 initiation message. For example, a packet 1315 shown in FIG. 13 is a preferred example for the implementation of the prefix preference message using the IKEv2 initiation message.

The packet 1315 contains three essential parts. The first part is an IPv6 header 1316. The IPv6 header 1316 includes source and destination information to send out the IKEv2 initiation message correctly. The second part is an IKEv2 header part 1317 of an IKEv2 packet, and the third part is an IKEv2 payload part 1322.

The IKEv2 header part 1317 includes an IKE_SA initiator SPI field 1318, an IKE_SA responder SPI field 1319, a standard field 1320 and a message ID field 1321. These four fields are standard fields for the IKEv2 header.

The IKE_SA initiator SPI field 1318 includes an identifier of the initiator for identifying unique IKE security association (SA), and the IKE_SA responder SPI field 1319 includes an identifier of the responder for identifying unique IKE security association.

The standard field 1320 contains many standard fields used in the IKEv2 header such as the type or flag of the exchanged message. A new flag type is embedded in the standard field 1320 to indicate the presence of the prefix preference message. The message ID field 1321 is a message identifier field including an identifier of the message.

The IKEv2 payload part 1322 includes multiple payload fields. In general, one or more payloads are used for IKEv2 signaling. For the sake of clarifying the illustration, there is shown only a new payload carrying the information necessary for the prefix preference message according to the present invention, such as a prefix to be reused, a prefix to be deleted or a prefix to be recycled.

The IKEv2 payload part 1322 may include APN (Access Point Name) information associated with the prefix to be notified. When the APN information is included in the IKEv2 payload part 1322, the entity receiving the message uses the APN information to acquire a P-GW identifier (PDN Gateway ID) therefrom.

For example, in a 3GPP system, when the MN 100 establishes a connection to an evolved packet system (EPS) provided in a 3GPP core network, a prefix corresponding to an APN value for connection to the Internet is notified as APN information for Internet browsing. The MN 100 decides to use a WLAN interface to establish a connection to the EPS via an untrusted WLAN access system. When detecting that the WLAN access system is untrusted WLAN (in such a manner to be notified that the WLAN access system is untrusted WLAN through a router advertisement message received from an access point of the WLAN system, to detect that it is not a trusted WLAN access system, that the MN 100 has and holds the information beforehand, or to be notified as a return value when connecting to the WLAN access system), the MN 100 starts a procedure for establishing the connection to the EPS from the WLAN access system via an ePDG (enhanced Packet Data Gateway). Therefore, the MN 100 sends the IKEv2 packet 1315 including the IKEv2 payload part 1322 describing the APN for Internet access and the prefix. The ePDG inquires the AAA server about the P-GW identifier based on the APN information extracted from the IKEv2 payload part 1322. The P-GW identifier may be a P-GW address or information (e.g., P-GW host name or URI) for deriving the P-GW address therefrom. The ePDG establishes a connection to the P-GW of the acquired address on behalf of the MN 100.

Further, the prefix preference message may be implemented using a layer 2 (L2) mechanism or a layer 2 message like a layer 2 frame 1307 shown in FIG. 13, for example.

For example, this prefix preference message can be adopted when the MN establishes a connection to the 3GPP core network via a trusted non-3GPP access network such as Interworking WLAN (I-WLAN) or WiMAX, or a cellular system (cdma2000 or the like specified in 3GPP2).

The first field of the layer 2 frame 1307 in FIG. 13 is a first flag field 1300 indicative of the beginning of the frame, being followed by a media access control (MAC) address field 1301. This MAC address field 1301 includes a source address and a destination address of the frame.

This is followed by a control field 1302 and a protocol ID field 1303 included to identify that a specific type of frame is used. This protocol ID field 1303 includes a value related to a packet sent via an upper layer. For example, when the prefix preference information is sent out via L2, the protocol ID field 1303 becomes NULL. Even if the prefix preference information can be sent out via L2, it is necessary to perform, from layer 3 (L3), this signaling and decision on transmission of associated parameters embedded in this signaling.

Then, there is an information field 1304. This information field 1304 is used for transmission of information, such as a prefix to be reused, a prefix to be deleted or a prefix to be recycled, necessary for the prefix preference message according to the present invention. Following this information field 1304, there is a frame check sequence field 1305 for transmission (for error identification and correction) without falsification of the frame. In the end, there is a second flag field 1306 used to delimit (end) the frame.

In the 3GPP system, there is a request bearer resource modification message as an example of the layer 2 mechanism. This message is sent to a mobility management entity (MME), and then forwarded to an S-GW (Serving Gateway) as a bearer resource command. Here, the MN 100 may add an information element or protocol configuration option for carrying the prefix preference message (the reduce prefix request, the reuse prefix request or the recycle prefix request) to the request bearer resource modification message. When a prefix is associated with each bearer in a one-to-one relationship, a prefix for which deletion/reuse/recycle is requested does not need to be specified in the prefix preference message included in the request bearer resource modification message.

As another example of the layer 2 mechanism, there is a modify PDP (Packet Data Protocol) context request message sent from the MN 100 to the network. Like the request bearer resource modification message, the MN 100 can add the information element or protocol configuration option for carrying the prefix preference message (the reduce prefix request, the reuse prefix request or the recycle prefix request) to the modify PDP context request message.

In particular, the prefix preference message can be implemented using a prefix scope binding update message. The prefix scope binding update message is used at present by the mobile node requesting a mobility anchor (e.g., P-GW) within 3GG to continue the prefix. This can also be used to carry the reduce prefix request or the reuse prefix request.

For example, if there is "R" bit in the flag of the binding update message, it indicates that the mobile node requests a recipient of this message to continue the use of the prefix included in the prefix scope binding update message, and the mobile node can use it as the reduce prefix request by deleting R bit or omitting the prefix in the binding update message. Likewise, the reuse prefix request for using the prefix of the first interface on the second interface can be made by inserting the prefix allocated to the first interface into a binding update message sent in association with the second interface.

In the aforementioned embodiment of the present invention, the description is made taking the case where the destination of the prefix preference from the MN 100 is the mobility management domain 110 (any entity within the mobility management domain 110), but the actual destination (physical node) of the prefix preference depends on the system configuration of the mobility management domain 110.

For example, when the mobility management domain 110 is of sufficiently managed, closed configuration, the operator of the mobility management domain 110 may desire not to reveal, to the MN 100, the address of a core node within the mobility management domain 110. In this case, since only the address of a MAG is revealed to the MN 100, the prefix preference is always sent to the MAG, and the MAG performs processing on the message including the prefix preference and forwarding it to an another node (e.g., DHCP server or AAA server).

Further, when the mobility management domain 110 allocates a prefix to the MN110 using DHCP, the prefix preference may be sent to the DHCP server as an option of a DHCP request message or in any other format. Since the DHCP server is a node for managing the prefix allocation to the MN 100, the overhead for the signaling message can be considerably reduced.

The MN 100 may also send the prefix preference to a LMA. The LMA needs to hold, in a binding cache, information on the prefixes allocated to the MN 100, and in view of this, sending the prefix preference to the LMA is useful.

Further, the LMA may have the function of allocating a prefix to the MN 100 depending on the configuration of the mobility management domain 110. In such a case, since the LMA may manage the prefix, the transmission of the prefix preference to the LMA is useful.

Further, the MN 100 can send the prefix preference to the AAA server by inserting the prefix preference into an AAA signaling message as an option. When the prefix preference is sent upon activation of a network interface, the insertion of the prefix preference in the AAA signaling message sent upon activation of the network interface as well is useful. The AAA server may control prefix allocation and prefix management depending on the configuration of the mobility management domain 110.

For example, any entity within the mobility management domain 110 has a prefix correspondence maintaining section for managing the allocation of a network prefix to the MN 100 and maintaining a correspondence relationship between the network prefix allocated to the MN 100 and the MN 100, and a prefix management section for changing the correspondence relationship between the network prefix allocated to the MN 100 and the MN 100 based on prefix preference information when receiving, from the MN 100, the prefix preference information including information for achieving a state where network prefixes necessary for the MN 100 are allocated. The prefix management section changes the correspondence relationship between the network prefix allocated to the MN 100 and the MN 100 to enable reduction of an unnecessary prefix, reuse thereof on another interface or recycle thereof to another MN according to each of the above-mentioned modes for the mobile terminal.

In the 3GPP configuration, the prefix preference message may be sent to a serving gateway (S-GW), an enhanced Packet Data Gateway (ePDG) or a packet data network gateway (P-GW). Although the mobile node may not be permitted to directly communicate with the AAA server (i.e., 3GPP HSS), the prefix preference message may be embedded into an AAA exchange message and passed to the HSS.

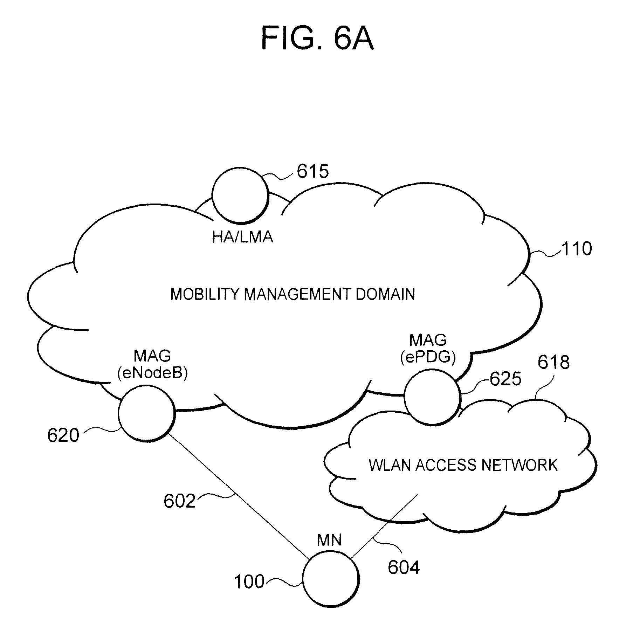

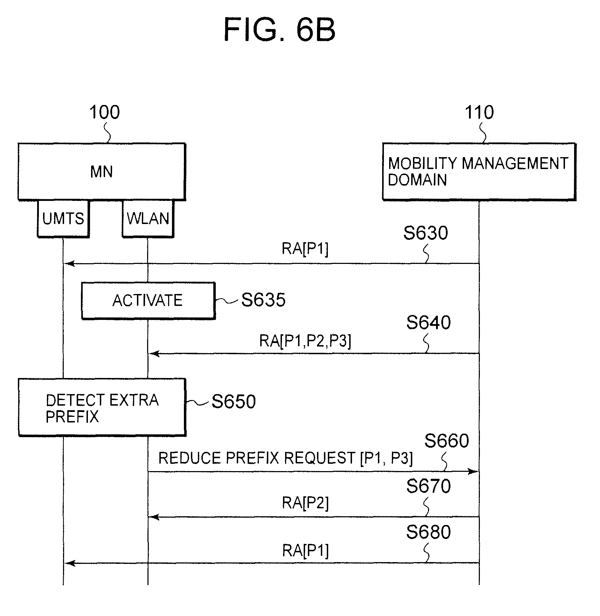

The present invention can also be applied to solve another problem with prefix allocation in the mobility management domain 110. Referring to FIG. 6A and FIG. 6B, an example of the application of the present invention to solve the other problem with prefix allocation in the mobility management domain 110 will be described.

FIG. 6A shows a scenario when the MN 100 moves within the mobility management domain 110. First, the MN 100 has only an active UMTS connection 602, and is being connected to a MAG 620 as an eNodeB of UMTS. A HA/LMA 615 allocates first prefix P1 to a UMTS interface, and the MN 100 uses this prefix as its home prefix.

Some time after that, the MN 100 activates a WLAN interface in a WLAN access network 618 to establish a new connection to a MAG 625. When the WLAN access network 618 is untrusted WLAN, WLAN connection 604 is PPP or EAP connection, and the MAG 625 is an ePDG.

Here, it is necessary to consider what kind of prefix should be allocated to the MN 100 with respect to this WLAN connection 604. In this regard, some examples are considered as follows.

First, the MAG 625 can allocate second prefix P2 (prefix different from prefix P1 already allocated) of the mobility management domain 110 to the MN 100 to enable the MN 100 to configure a care-of address using this prefix. The prefix allocated from the mobility management domain 110 is maintained as long as the MN 100 is attached to the mobility management domain 110.

Secondly, the MAG 625 can allocate, to the MN 100, a local prefix that is not maintained as a prefix of the mobility management domain 110. This prefix is generally used for route optimization (because packets destined to an address configured based on this prefix do not need to be forwarded to the HA/LMA 615).

Thirdly, when the mobility management domain 110 supports the allocation of one prefix to multiple network interfaces of the same MN 100, the same prefix P1 can be allocated to a WLAN interface of the MN 100. In this case, the MN 100 may use either of the UMTS interface and the WLAN interface for data flows associated with a home address configured from prefix P1.

However, in either case, it is necessary for the mobility management domain 110 to grasp the type of prefix necessary for (or desired by) the MN 100. Since the mobility management domain 110 grasps the type of prefix necessary for (or desired by) the MN 100, the MN 100 can give notice of the need (the type of prefix necessary for the MN 100) based on the present invention.

One preferred method to achieve this is that when the MN 100 is connected to the MAG 625, the MAG 625 first allocates prefixes of all allocatable types to the MN 100 and causes the MN 100 to send the reduce prefix request and release all unnecessary prefixes while holding necessary prefixes. This method will be described later with reference to FIG. 6B.

Another method is that the MN 100 uses the recycle prefix request to acquire a local prefix, the reuse prefix request to acquire a home prefix, or acquires second prefix P2 of the mobility management domain 110 in normal connection processing, so that the MN 100 can determine which mode according to the present invention is appropriate for the prefix to be allocated from the mobility management domain 110, enabling selection of a mode to be used.

Referring to FIG. 6B, a method under which all allocatable types of prefixes are first allocated to the MN 100 to cause the MN 100 to select a necessary prefix will be described.

In FIG. 6B, the MN 100 receives, in step S630, prefix P1 on the UMTS interface through a RA message. After that, the MN 100 activates the WLAN interface in step S635 to establish a connection to the MAG 625. At this time, the mobility management domain 110 first allocates all different types of prefixes to the MN 100. For example, in step S640, the mobility management domain 110 sends the MN 100 a RA message including prefix P1, prefix P2 (e.g., local prefix) and prefix P3 (e.g., still another prefix allocated from the mobility management domain 110).

When the MN 100 receives all different types of prefixes in step S640, the prefix detection section 250 of the MN 100 starts detection processing for extra prefixes in step S650. Here, suppose that the MN 100 desires to use the local prefix (prefix P2 mentioned above). In this case, the MN 100 sends the reduce prefix request in step S660 from the WLAN interface to the mobility management domain 110, releasing prefix P1 and prefix P3. As a result, as indicated by a RA message in step S670, prefix P2 is allocated to the WLAN interface of the MN 100, while prefix P1 is allocated to the UMTS interface as indicated by a RA message in step S680.

Next, the operation of a prefix reuse method in an environment where two or more LMAs exist will be described. Note that the mechanism according to the present invention is applicable to the case of a NetLMM domain where two or more LMAs exist. The description will be made taking into account the configuration as shown in FIG. 7A.

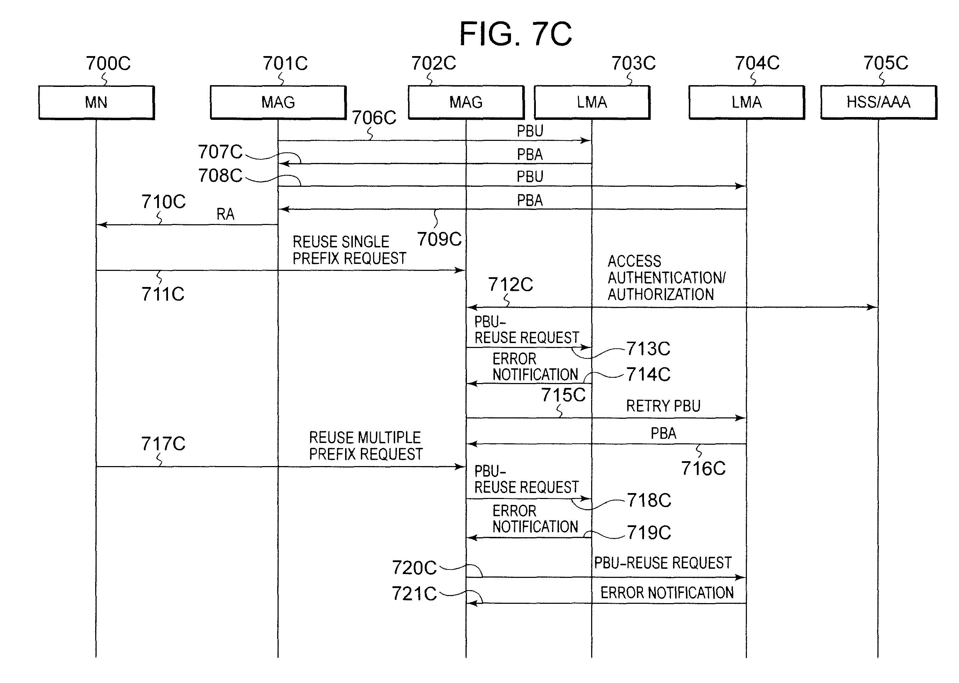

When the prefix reuse mechanism is used, the operation of a message sequence shown in FIG. 7C is performed, for example. In FIG. 7C, an MN 700C is attached to a NetLMM domain having two LMAs (e.g., LMA 703C and LMA 704C). It is assumed that IF1 of the MN 700C is connected to a MAG 701C and IF2 of the MN 700C is not connected to any node. It is also assumed that the LMA 703C and the LMA 704C have paths of prefixes allocated to the MN 700C via the MAG 701C.

Since the MN 700C is connected to the MAG 701C, the MAG 701C sends the LMA 703C a PBU 706C and receives a PBA 707C. According to the vertical handoff operation of the IF2 during a transition from the state shown in FIG. 7A to the state shown in FIG. 7B, the PBA 707C has two prefixes (prefixes P1 and P2). These prefixes are used to access a service from a PDN connected to the LMA 703C.

Similarly, the MAG 701C sends the LMA 704C PBU708C and receives a prefix from the LMA 704C as a response through a PBA 709C. Thus, two prefixes (prefix P3 and P4) are received through the PBA 709C. This prefix allocation may be done as a result of conventional handoff.

For example, suppose that prefix P2 is first allocated to the IF2 and managed by the LMA 703C. Then suppose that handoff to the IF1 is performed by the vertical handoff operation. Similarly, suppose that prefix P4 is first allocated to the IF2 and managed by the LMA 704C. Then suppose that a handoff to the IF1 is performed by the vertical handoff operation. Further, suppose that prefix P1 is allocated by the LMA 703C to the IF1 and prefix P3 is allocated by the LMA 704C to the IF1. As a result, prefixes P1, P2, P3 and P4 sent as prefix options are included in the RA 710C.

Here, suppose that after the IF2 is connected to an access network, the MN 700C decides to shift a flow associated with prefix P4 to the IF2. For example, the MN 700C may have explored an access network suitable for the IF2 for load balancing (or for other reasons such as that a route of a newly explored access technology type is suitable for the flow associated with prefix P4). At this time, the MN 700C sends a reuse prefix request message 711C to a MAG 702C connected to the IF2.

For example, the reuse prefix request message 711C may be embedded in a connection message unique to the access technology. The reuse prefix request message 711C includes prefix P4.

When receiving this reuse prefix request message 711C, the MAG 702C starts access authentication and exchange authentication signals with an HSS/AAA entity 705C. The HSS 705C provides information indicative of success in access authorization, the addresses of the LMA 703C and the LMA 704C and service subscriber information associated with the MN 700C.

Here, it is assumed that the MAG 702C selects the LMA 703C and sends it a reuse prefix request message 713C (PBU-reuse request). In this message 713C, not only is prefix P4 embedded in an HNP (Home Network Prefix) option, but also a new handoff indicator option is included to indicate that this is a vertical handoff for a subset of prefixes. When receiving this message 713C, since the LMA 703C cannot identify prefix P4 in the binding cache, it sends the MAG 702C an error notification 714C indicating that prefix P4 is not supported by the LMA 703C or prefix P4 requested cannot be allocated to the MN 700C.

When receiving this message 714C, the MAG 702C tries to send a PBU message 715C to the LMA 704C. When receiving the PBU 715C, the LMA 704C searches the binding cache to identify a mobility session associated with prefix P4. In this case, the LMA 704C sends an appropriate PBA 716C indicative of success in reuse of the prefix. Before sending a confirmation message PBA 716C of the prefix reuse to the MAG 702C, the LMA 704C deletes P4 associated with the mobility session created in association with the IF1, creates a new mobility session for the IF2, and allocates prefix P4 to the created new mobility session.

When receiving the PBA message 716C, the MAG 702C sends a RA to the IF2 of the MN 700C to enable the MN 700C to configure an address using prefix P4. Thus, the object to move a prefix from an interface to another interface through the reuse prefix request message used is achieved. However, if the MAG 702C first selects a wrong LMA, a delay in signaling (e.g., error notification) will occur. The following describes a case where the MN 700C decides to shift both of prefixes P1 and P4 to the IF2 in FIG. 7C.

As discussed above, it is assumed that prefix P1 belongs to the LMA 703C and prefix P4 belongs to the LMA 704C. As mentioned above, when acquiring the reuse prefix request message 717C, the MAG 702C acquires the addresses of the LMA 703C and the LMA704 from the HSS/AAA 705C in the authentication processing. However, the MAG 702C cannot grasp which LMA has prefixes P1 and P4. When sending a reuse prefix request message 718C related to prefix P4 through PBU (PBU-reuse request) to the LMA 703C, the MAG 702C receives an error notification 719C from the LMA 703C. Further, when sending a reuse prefix request message 720C (PBU-reuse request) to the LMA 704C to reuse prefix P1, the MAG 702C receives an error notification 721C from the LMA 704C. A description will be made taking a case where the reuse prefix request mechanism is extended to eliminate a delay caused by such an error notification.

Next, a description will be made of making a reuse prefix request by providing APN information on each prefix from the MN when two or more LMAs are located. When sending a reuse prefix request, the mobile node enables the extension for providing associated APN.

Since the APN associated with a prefix required to be shifted to another interface is provided from the mobile node, the MAG can analyze the APN mapped into the prefix to identify the address of a P-GW or LMA associated with each prefix. After analyzing the APN, the MAG groups the prefixes belonging to the same APN (i.e., the same LMA). As a result, the MAG can send a PBU for the reuse prefix request to the LMA associated with the grouped prefixes.

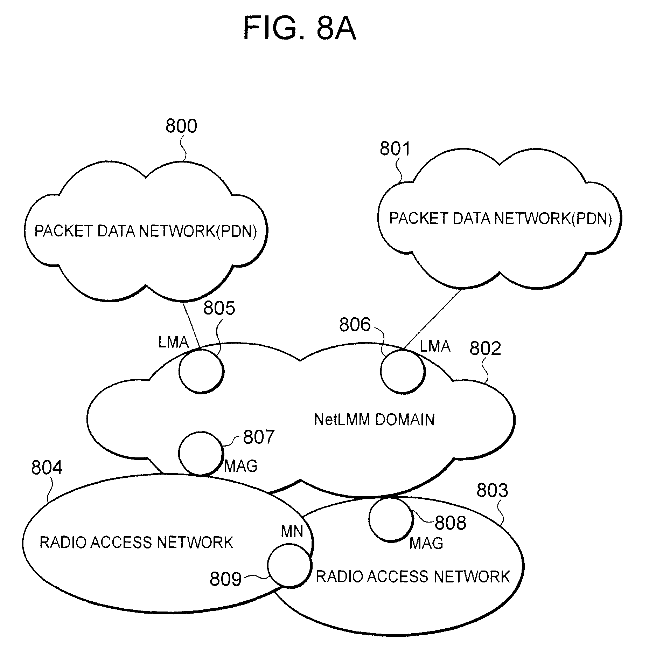

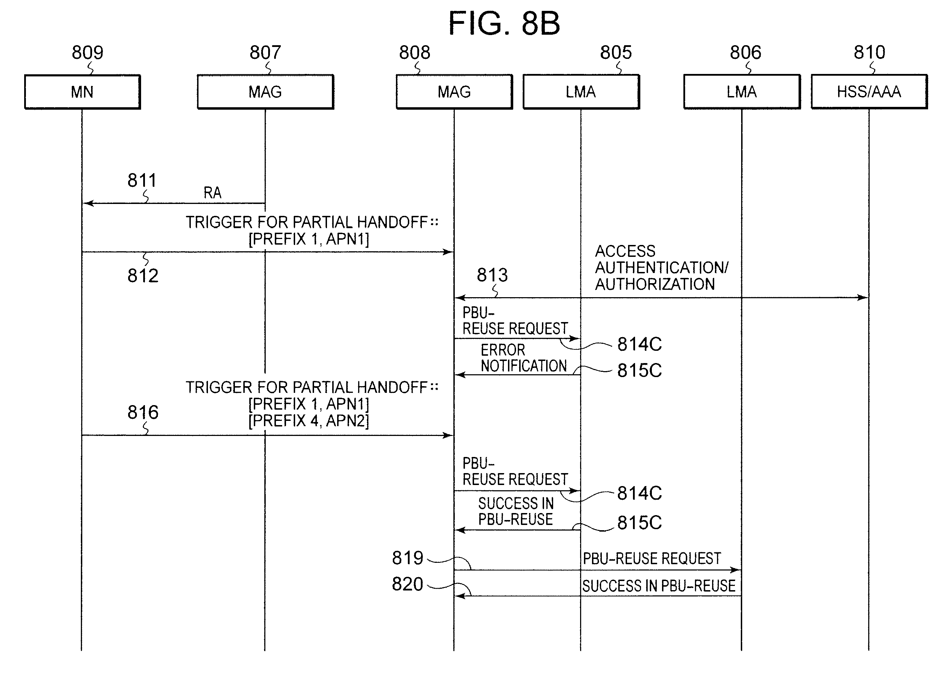

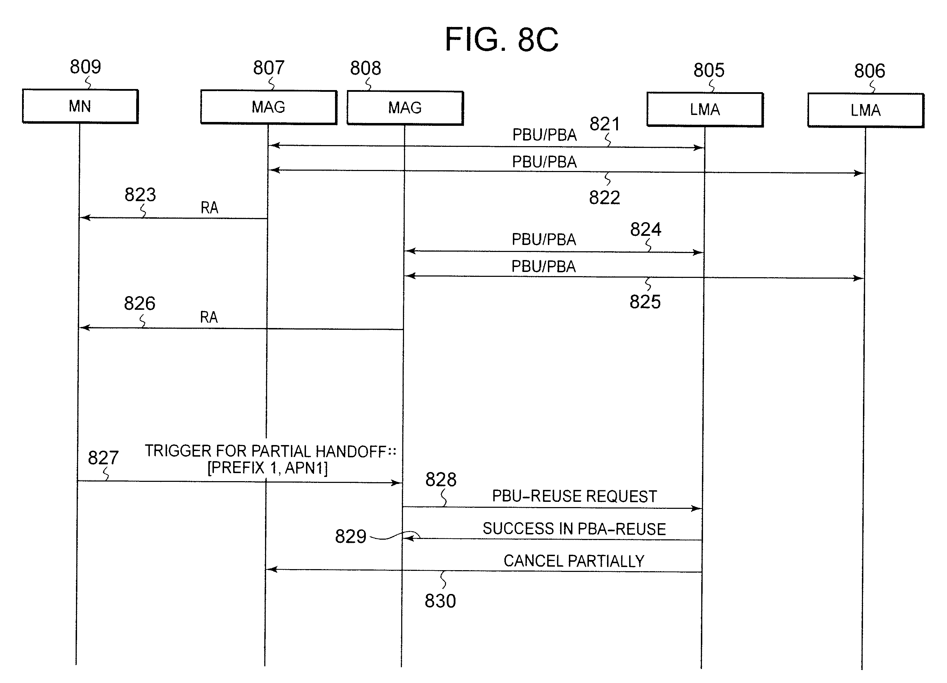

In this method, when two or more LMAs exist, each prefix and associated APN are provided through a reuse prefix request message. This method is called an extended reuse prefix request method, and will be described with reference to FIGS. 8A, 8B and 8C.

FIG. 8A shows an example of a network configuration including a network entity associated with the operation of the extended prefix reuse method according to the present invention. In FIG. 8A, an MN 809 tries to make a reuse prefix request via a newly activated interface or an existing interface.

In FIG. 8A, the MN 809 is attached to a NetLMM domain 802 through an interface IF1 connected to a MAG 807. The MAG 807 manages mobility related to the IF1, and sets, to two LMAs (LMA 805 and LMA 806), a binding associated with a mobility session connected to the IF1 of the MN 809. Suppose that the LMA 805 is connected to a PDN 800 and the LMA 806 is connected to a PDN 801.

A service provided by the PDN 800 is identified by APN 1, and a service associated with the PDN 801 is identified by APN 2. In the above-mentioned example shown in FIGS. 7A, 7B and 7C, the MAG 807 notifies, through a RA message, the MN 809 of two prefixes P1 and P2 acquired from the LMA 805 and two prefixes P3 and P4 acquired from the LMA 806.

The MN 809 uses a second interface IF2 to explore a radio access network 803 by means of a radio scanning mechanism. Like in the above-mentioned example, suppose that the MN 809 has decided to shift a subset of prefixes from the IF1 to the IF2 newly activated. According to a preferred embodiment of the present invention, the MN 809 can send a reuse prefix request including associated APN information to shift only some of prefixes allocated to a certain interface (e.g., IF1) to another interface (e.g., IF2) connected to a MAG 808.

The following describes an example of the operation of the extended reuse prefix request method with reference to a message sequence chart shown in FIG. 8B. In FIG. 8B, for example, suppose that the MN 809 is connected to the MAG 807 and the MN 809 confirms four prefixes (P1, P2, P3 and P4) in a RA 811. For example, the prefixes to be allocated are acquired by two PBU/PBA operations for different LMAs, such as the LMA 805 and the LMA 806.

Here, suppose that the MN 809 tries to shift prefix P1 to an interface newly activated. Since prefix P1 is so allocated that the MN 809 can access the service from the PDN connected to the LMA 805, the MN 809 sends the MAG 808 a reuse prefix request message 812 (a trigger to hand off some prefixes) with associated APN information added thereto. In other words, in this message 812, information on APN 1 is included and associated information on prefix P1 is embedded.

As indicated by message exchange 813, the MAG 808 performs access authentication and authorization for a new connection with an HSS/AAA 810. Upon successful authentication, the MAG 808 can identify the LMA 805 correctly from the information on APN 1 in the message 812 and send the LMA 805 a reuse prefix request message 814 (PBU-reuse request).

Here, although the description is made taking a case where the MN 809 shifts only one prefix (prefix P1) to a new interface (the IF2), if the MN 809 has decided to shift more prefixes (e.g., prefixes P1 and P4), APN information associated with prefixes P1 and P4 can be included in a layer 2 trigger 816 (a trigger to hand off some prefixes). As mentioned above, prefix P1 has the LMA 805 as its logical base point and prefix P4 has the LMA 806 as its logical base point.

After analyzing information on APN 1 and APN 2 to identify the addresses of the LMAs, the MAG 808 sends two sets of PBUs for reuse prefix requests to the LMA 805 and LMA 806 (i.e., a PBU 817 is sent to the LMA 805 and a PBU 819 is sent to the LMA 806). In FIG. 8B, a response from each of the LMAs 805 and 806 is indicated by a PBA 818 and a PBA 820, respectively.

In this example, the APN information allows for a case of being ascribed to a single LMA without considering a LMA cloud (i.e., a case where two or more LMAs are identified from the APN information). However, the extended reuse prefix request method described here can also be used for the LMA cloud. In this case, the MAG 808 analyzes APN to identify the address of the LMA cloud associated with the single APN, and then waits for and refers to HSS information to identify correct LMA addresses associated with the prefixes. At this time, the LMA addresses used by the mobile node may be provided to the MAG 808 during authentication/authorization exchange 813. The MAG 808 can analyze each individual APN to check it against the LMA address provided from the HSS/AAA 810.

For example, when APN 1 is ascribed to LMAs 805A, 805B and 805C and the HSS/AAA 810 provides the addresses of the LMA 805 and LMA 806 during authentication exchange 813, the MAG 808 can identify the correct LMA address as that of the LMA 805 and send a reuse prefix request PBU associated with prefix P1 to the LMA identified.

Next, the extended reuse prefix request method using APN information when two or more interfaces are fully connected will be described. In a configuration in which two or more LMAs are used, if the mobile node has two or more connection interfaces, the extended reuse prefix request method including APN information can be employed. The following description will be made with reference to FIG. 8C.

In FIG. 8C, it is considered a case where the MN 809 uses all the interfaces at the same time to establish attachment to the NetLMM domain 802 shown in FIG. 8A. Further, suppose that the MN 809 tries to get services from PDNs (e.g., the PDN 800 connected to the LMA 805 and the PDN 801 connected to the LMA 806). The IF1 of the MN 809 is connected to the MAG 807 through a radio access network 804 and the IF2 of the MN 809 is connected to the MAG 808 through a radio access network 803.

In this embodiment, although the MN 809 is connected to radio access networks through two or more interfaces, it will be apparent to those skilled in the art that the method described in this specification is not restricted by the type of access network and is also applicable to a case where the mobile node is directly connected to a wired access network.

In this example, it is assumed that the MN 809 receives two prefixes P1 and P3 on the first interface IF1 from the MAG 807 to access PDN services from the PDN 800 and the PDN 801, respectively. These prefixes are provided through PBU/PBA messages 821 and 822, respectively. Further, it is assumed that the MN 809 receives two prefixes P2 and P4 on the second interface the IF2 from the MAG 808 to access PDN services from the PDN 800 and the PDN 801, respectively. These prefixes are provided through PBU/PBA messages 824 and 825, respectively. This is apparent from the fact that prefixes P1 and P2 have the LMA 805 as their logical base point, and prefixes P3 and P4 have the LMA 806 as their logical base point.

After receiving PBAs from the LMAs 805 and 806, the MAG 807 sends a RA 823 advertising prefixes P1 and P2. Similarly, after receiving PBAs from the LMA 805 and the LMA 806, the MAG 808 sends a RA 826 advertising prefixes P3 and P4.

Prior to describing a decision to fulfill a reuse prefix request when the connection interfaces are fully connected, it is here considered a use case of using two or more interfaces at the same time to access services from two or more PDNs managed by different LMAs. For example, the MN 809 may try to start two or more flows with two or more peer nodes located in the two PDNs 800 and 801 shown in FIG. 8A. For example, four flows (two flows are connected to the PDN 800 and the other two flows are connected to the PDN 801) are considered as such flows.

In this case, load balancing of these flows among two or more interfaces of the MN 809 is considered more beneficial than a case where all the four flows are allocated to a certain interface and hence the load via a specific access technology is increased. After accomplishing basic load balancing on the flows, if the conditions for the access networks to which the MN 809 is connected vary, the MN 809 may desire further optimization to improve flow capabilities or QoS associated with the flows and/or to improve the load balancing operation. At this time, the MN 809 may desire to shift a flow associated with a certain prefix to another interface that is in a connected state. This may be able to avoid a delay in flow due to network congestion or a delay due to handover.

Load balancing may also be performed due to a nonuniform access network state of the interfaces of the MN 809. For example, if the bandwidth available for an access network is higher than that for another access network, the MN 809 may desire to achieve load balancing in a nonuniform environment by shifting a flow associated with a prefix to an access technology with more room for bandwidth. The nonuniform environment is, for example, a state in which any access technology connected through a specific interface of the mobile node is more congested than another access technology connected through another interface of the mobile node.

As a result, when deciding to shift prefix P1 originally allocated to the IF1 to be via the IF2, the MN 809 sends a reuse prefix request message 827 shown in FIG. 8C. This message 827 includes prefix P1 and information on APN 1.

When receiving this message 827, the MAG 808 analyzes APN 1 to identify the address of the LMA 805. The MAG 808 can send the LMA 805 a reuse prefix request PBU 828 to request the LMA 805 to shift prefix P1. When approving the request for shifting prefix P1, the LMA 805 sends the MAG 808 a PBA 829 as a response and the MAG 807 a cancel message 830 (message for partially canceling prefix P1 alone) to remove prefix P1 from the IF1.

This cancel message may be sent using a PBA with a flag set to delete a subset of prefixes, or using a binding cancel message provided with a new flag indicative of deletion of a subset of prefixes as disclosed in Non-Patent Document 7.

This case is to shift one prefix from a connection interface to another interface, and use of APN information is useful in this case. Thus, when a prefix is shifted without signaling associated with the HSS, mapping between APN sent by the mobile node and the prefix is very useful to identify a correct LMA.

Next, a description will be made of the extended reuse prefix request method using APN when two or more PDNs share the APN. In the preferred embodiment of the present invention, the extended reuse prefix request method using APN information is usable in an environment where there are two or more PDNs in association with a single APN. Such an environment is disclosed in Non-Patent Document 5. In Non-Patent Document 5, when a single APN is allocated to two or more PDNs, the PDNs to which the same APN is allocated need to be managed by the same LMA or P-GW.

In one exemplary scenario, the MN establishes connections to two or more PDNs in a PDN domain specified by one APN to enjoy services. When multiple terminals without 3GPP access capabilities are associated with the MN, the two or more PDN connections to a signal PDN may be established by the MN (for example, when these terminals contain contract information like Universal Subscriber Identity Module (USIM) without media for performing terminal authentication).

Another exemplary scenario is that the MN has had PDN connections including IPv4 addresses and IPv6 prefixes until then (e.g., before handover) but the MN desires to deal with the connections based on the respective addresses/prefixes as separate PDN connections.

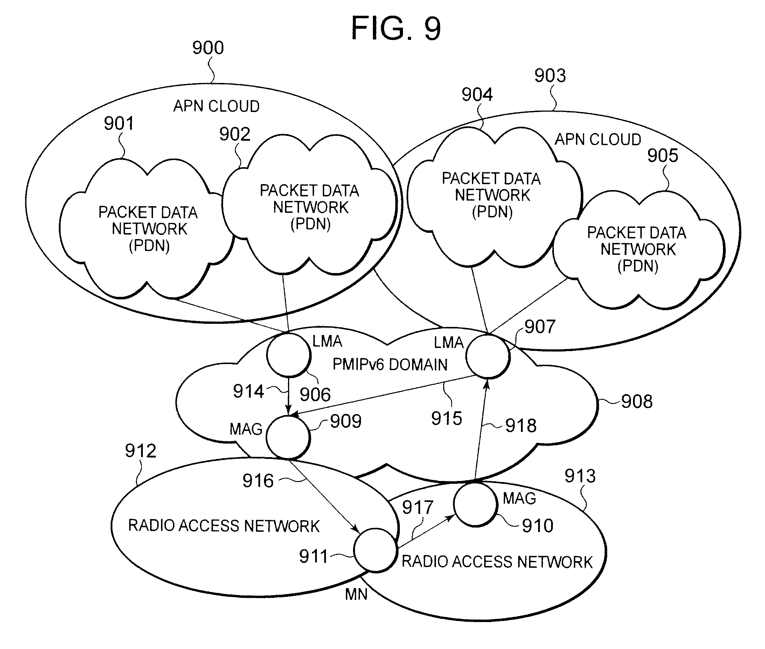

Referring to FIG. 9, a description will be made taking a case where the present invention is adopted when there are two or more PDNs associated with a single APN. In FIG. 9, suppose that an MN 911 is first connected to a MAG 909 through one interface (e.g., IF1). Suppose further that the MN 911 is enrolled in services to get services from PDNs 901, 902, 904 and 905.

The PDNs 901 and 902 belong to the same APN cloud 900. This means that the same APN (e.g., APN 1) is allocated to the PDNs 901 and 902. The PDNs 904 and 905 belong to the same APN cloud 903. This means that the same APN (e.g., APN 2) is allocated to the PDNs 904 and 905.

Since the MN 911 is enrolled in the services to get the services from the four PDNs 901, 902, 904 and 905, when the MN 911 establishes attachment to a NetLMM domain (PMIPv6 domain)908 through the IF1, the MAG 909 sends one PBU to a LMA 906 and a LMA 907, respectively. The LMA 906 is a gateway for accessing the services from the PDNs 901 and 902. The LMA 907 is a gateway for accessing the services from the PDNs 904 and 905.

As mentioned above, upon the initial connection, the MAG 909 acquires information on LMAs (e.g., the addresses of the LMA 906 and the LMA 905) from APN 1 information and APN 2 information provided from the HSS. In FIG. 9, the details of PBU signaling related to the initial connection are not clearly illustrated for the sake of simplifying the illustration.

For example, APN 1 information is included in the PBU sent to the LMA 906 and APN 2 information is included in the PBU sent to the LMA 907. When either of the above-mentioned LMAs 906 and 907 receives the PBU, the LMA 906 or 907 grasps that APN (APN 1 or APN 2) inserted in the PBU responds to two or more PDNs. Then, the LMAs 906 and 907 provide necessary prefix (i.e., two prefixes) through PBAs. For example, before allocating correct prefixes to PBAs 914 and 915, the LMA 906 maps APN 1 inserted in the PBU into PDN1 and PDN2. Similarly, the LMA 907 maps APN 2 inserted in the PBU into PDN4 and PDN5.

The PBU sent from the MAG 909 is a normal initial connection trigger or a re-registration trigger. After receiving the PBU, the LMAs 906 and 907 return corresponding PBAs 914 and 915 to the MAG 909. Prefixes P1 and P2 are included in an HNP option of the PBA 914. Similarly, prefixes P4 and P5 are included in the HNP option of the PBA 915. The prefixes P1, P2, P4 and P5 are used to access the services from the PDN1, PDN2, PDN4 and PDN, respectively. When receiving these prefixes through the PBAs 914 and 915, the MAG 909 sends a RA 916 capable of advertising all the prefixes (prefixes P1, P2, P4 and P5).

Here, suppose that the MN 911 has decided to use a reuse prefix request to connect the second interface IF2 to a MAG 910. For example, the MN 911 sends a reuse prefix request message 917 having prefix P5 and APN 2. When receiving this message 917, the MAG 910 can identify a LMA (LMA 907) associated with prefix P5. In other words, the MAG 910 analyzes APN 2 to acquire the address of the LMA 907. In this case, the MAG 910 sends the LMA 907 a reuse prefix request PBU 918, and this can fulfill the reuse prefix request even when one APN is allocated to two or more PDNs.

Next, a description will be made of the functional architecture of a mobile node necessary to move, into action, an extended reuse prefix request mechanism using APN information. The routing section 220 shown in FIG. 2 provides IPv6 routing support related to various types (protocols) of signaling such as ICMPv6 and IKEv2 protocols. An extended reuse prefix request message can be sent using an ICMPv6 or IKEv2 signaling message by supporting these various types of signaling.

Further, using the routing table 240 shown in FIG. 2, the above-mentioned signaling message with the reuse prefix request message embedded therein is sent out. Here, the prefix detection module 250 shown in FIG. 2 has two additional functions. The first additional function is a decision function for deciding the need of APN information upon fulfilling the reuse prefix request message. The second additional function is a function for identifying prefixes to be used in the reuse prefix request message when the reuse prefix request message is sent to perform matching between APN and prefix.

Further, the prefix management section 260 for sending the reuse prefix request message has the function of deciding whether to send the message using L3 signal or L2 signal. The prefix management section 260 also has the function of grouping the prefixes and APN to build associated signaling using a routing mechanism in the L2 layer 220 implemented in the routing section 220 or a functional module (network interface 210).

The signaling interface 292 shown in FIG. 2 is a signaling interface for processing the reuse prefix request message especially when the reuse prefix request message needs to be sent via L2. For example, when there is no appropriate and secure L3 mobile node-MAG interface, transmission of the reuse prefix request message through L2 signaling such as connection signaling or new L2 signaling may be useful. In such a case, mapping between prefix and APN is directly sent from the prefix management section 260 to the L2 function implemented on the network interface 210 through the signaling interface 292. It will be apparent to those skilled in the art that the above-mentioned additional function in the network interface 210 is just an example of implementing the reuse prefix request message using APN and that the present invention can be implemented by any other method.

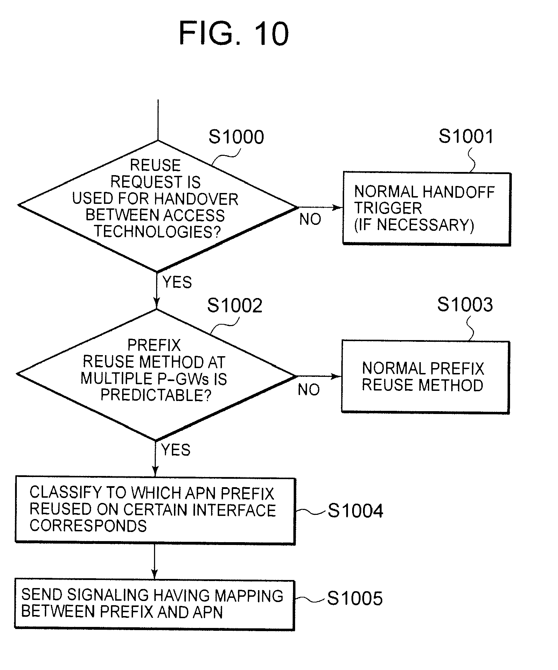

FIG. 10 shows an example of the operation of a mobile node suited to move the extended reuse prefix request mechanism into action in the preferred embodiment of the present invention.

In the first step S1000, the mobile node check if the mobile node needs to perform the reuse prefix request method on a handoff associated with a subset of prefixes. As mentioned above, the mobile node may perform the handoff of the reuse prefix request to achieve load balancing or better QoS of flows associated with the subset of prefixes.

If it is determined in this step S1000 that the reuse prefix request method does not need performing, normal vertical handoff processing is performed in step S1001. In this normal vertical handoff processing, all the prefixes are shifted in a vertical handoff from an interface to another.

On the other hand, if it is determined in step S1000 that the reuse prefix request method is performed, another determination processing is performed in step S1002. In other words, the mobile node determines in step S1002 whether the mobile node having two or more interfaces should add APN information to the reuse prefix request message. When the mobile node can predict that the mobile node accesses the services of the NetLMM domain using two or more LMAs, the mobile node may determine whether to provide APN in the reuse prefix request message. When information indicating, using a flag in the RA, whether the two or more LMAs are used is provided from the MAG, or when the mobile node has information statically configured beforehand (PLMN identifier or NetLMM domain identifier for identifying two or more LMAs for services associated with the mobile node), the mobile node can predict use of the two or more LMAs. Further, in an environment where the two or more LMAs are used, the MAG may acquire prefixes from different PBUs to deliver RAs sent from the MAG to the mobile node at different times.

The RAs carrying prefixes allocated to the same interface arrive at different times, and this enables the mobile node to predict that the mobile node accesses the services within the NetLMM domain using the two or more LMAs. When the mobile node is using an MIPv6 mode within this NetLMM domain to use different home agents, the mobile node can grasp that the two or more LMAs are being used to access multiple services in this domain. In this case, the LMA also has a HA function, and practically the functions are provided in one physical entity like LMA/HA. Thus, the mobile node can predict use of the two or more LMAs based on any of many kinds of information. For example, based on information provided from the network, information statically configured, or two or more RAs (or RAs carrying a set of multiple prefixes) received on the same interface in a short period of time, it can be determined that the two or more LMAs are being used. Such a prediction function enables the mobile node to perform the processing in step S1002.

If it is determined in step S1002 that the two or more LMAs is not used and APN information does not need to be added to the reuse prefix request message, the mobile node makes a reuse prefix request with a subset of prefixes embedded in a message (trigger message) in step S1003. On the other hand, if it is determined in step S1002 that the two or more LMAs are being used and APN information should be added to the reuse prefix request message, classification is done in step S1004 as to which prefix is associated with which APN, and a signaling message (trigger message) having mapping between prefixes and APNs is configured and sent out in step S1005.

This trigger message depends on the access network to which the extended reuse prefix request message is sent, which may be either L2 message or L3 message. Further, when L3 security is supported in the access technology, an ICMPv6 type L3 message may also be sent together with the reuse prefix request message. Further, when the access technology is associated with IKEv2, the reuse prefix request message may be transmitted using IKEv2 signaling. On the other hand, when the L3 message cannot be used within the access network, an L2 message needs sending.

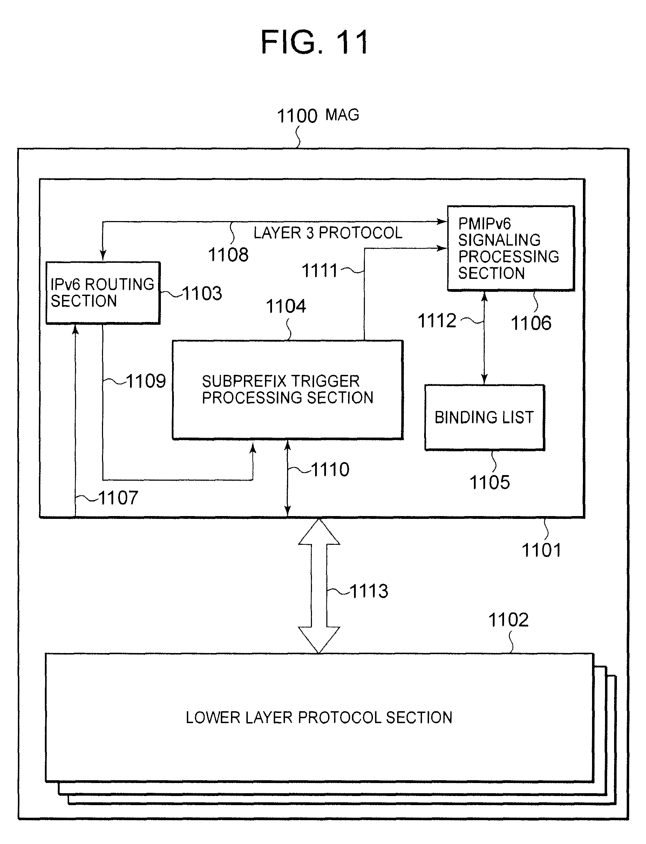

Next, an example of the architecture of the MAG for processing the reuse prefix request message having APN in the preferred embodiment of the present invention will be described. This functional architecture may be implemented, for example, by functional modules shown in FIG. 11.

A MAG 1100 in FIG. 11 shows all software, hardware and firmware to implement the MAG capability of processing the reuse prefix request message having APN information. In FIG. 11, it is assumed that the MAG 1100 can be implemented by two submodules (a lower layer protocol section 1102 and a layer 3 protocol section 1101). The lower layer protocol section 1102 consists of multiple lower layer protocol sections 1102. Each lower layer protocol section 1102 is associated with any access network to which the MAG 1100 is connected. This lower layer protocol section 1102 is a module mainly associated with the data link layer and the physical layer.

On the other hand, the layer 3 protocol section 1101 consists of four submodules as shown in FIG. 11. These submodules are an IPv6 routing section 1103, a subset prefix trigger processing section 1104, a binding list section 1105 and a PMIPv6 signaling processing section 1106. These submodules of the layer 3 protocol section 1101 have appropriate signaling interfaces for passing signaling messages between submodules as shown in FIG. 11.

The IPv6 routing section 1103 has a function for basic IPv6 routing mechanisms such as neighbor discovery and address configuration. In this IPv6 routing section 1103, a standard IPv6 header is added to a message, deleted from the message, or detected.

The subprefix trigger processing section 1104 has the function of extracting and collecting prefixes and associated APNs embedded in the reuse prefix request message. When extracting the prefixes and associated APNs in the reuse prefix request message, the subprefix trigger processing section 1104 can analyze all the APNs to identify the address of a LMA correctly corresponding to each prefix. This subprefix trigger processing section 1104 can pass, to the PMIPv6 signaling processing section 1106, information analyzed from the APNs such as the addresses of LMAs and associated prefixes, and create an appropriate PBU for an appropriate LMA.

The PMIPv6 signaling processing section 1106 has the function of preparing a new handoff indicator option value related to a PBU and completing handoff processing for reuse of prefixes, and the function of processing a cancel message sent from a LMA. This cancel message is described in the aforementioned embodiment. The principal function of the cancel message is to notify the MAG that a subset of prefixes processed for any mobile node at the MAG is no longer reasonable and hence has been canceled by the LMA.

When all preparatory options for the reuse prefix request message are formed in the PMIPv6 signaling processing section 1106, this PMIPv6 signaling processing section 1106 builds a normal PBU having an appropriate handoff indicator option value. When the reuse prefix request message is sent through a connection interface, a new type of handoff indicator option exists in the PBU. This option indicates that a prefix is deleted from the previously connected interface and the prefix is added to a binding cache entry associated with the connection interface.

Further, when the reuse prefix request message is sent through an interface newly activated, the PMIPv6 signaling processing section 1106 adds another new type of handoff indicator option value to the PBU, and requests the LMA to allocate a prefix to the binding cache entry created for the interface newly activated.

The PMIPv6 signaling processing section 1106 communicates with the binding list module 1105. Information on the interface connected to the MAG and necessary to send out downlink and uplink data packets associated with mobility is included in the binding list 1105. The association between prefixes and LMAs sent by processing for the reuse prefix request message is stored in this binding list 1105.

The lower layer protocol section 1102 has a signaling interface 1113 to the L3 protocol section 1101. In general, all pieces of signaling information are passed between the lower layer protocol section 1102 and the L3 protocol section 1101 through a signaling interface 1113. The signaling passed through the signaling interface 1113 may be out-of-band signaling such as a Neighbor Discovery message or in-band signaling such as a protocol header added to the data payload.

The signaling interface 1113 is further connected to any signaling interface (e.g., signaling interface 1107 or 1110 shown in FIG. 11) within the L3 protocol module 1101.

The interface 1107 is used to receive either an ICMPv6 message or an IKEv2 message in the lower protocol layer section 1102 and pass the message to the IPv6 routing section 1103. When receiving this signaling message, the IPv6 routing section 1103 deletes the IPv6 header and passes it to the subset prefix trigger processing section 1104 through the signaling interface 1109. The signaling interface 1111 is to pass prefixes and LMA address parameters to the PMIPv6 signaling processing section 1106. The signaling interface 1112 is used by the PMIPv6 signaling processing section 1106 to acquire parameters for configuring a PBU from the binding list section 1105.

When the reuse prefix request message is received through L2, the interface 1110 is used to receive the reuse prefix request message from the L2 message. The signaling interface 1108 is used by the PMIPv6 signaling processing section 1106 to pass a PBU to the IPv6 routing section 1103, and the PBU transmitting a reuse prefix request is configured using an appropriate IPv6 header. It will be apparent to those skilled in the art that the above-mentioned functional architecture of the MAG 1100 is just an example of performing processing for the reuse prefix request message having APN and that the present invention can be implemented by any other configuration.

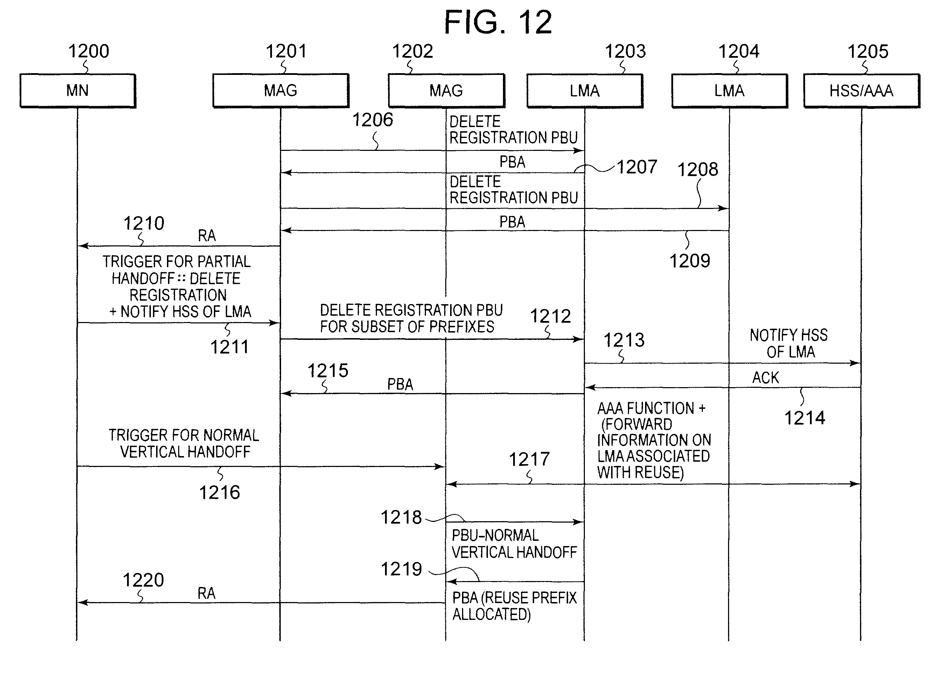

Next, as still another preferred embodiment, a spin-off example in which a LMA associated with the reuse prefix request message is notified to the HSS will be described. Referring to FIG. 12, a method and appropriate scenario related to this spin-off example and advantages of this spin-off example will be described.

In FIG. 12, suppose that an MN 1200 is connected to a MAG 1201 through the first interface IF1 to acquire prefixes from a LMA 1203 and a LMA 1204 in order to access services from a PDN connected to the LMA 1203 and a PDN connected to the LMA 1204. Further, suppose that the PDN connected to the LMA 1203 is identified by APN 1 and the PDN connected to the LMA 1204 is identified by APN 2.

The MN 1200 is attached to a NetLMM domain through both interfaces (IF1 and IF2), and as a result of shutting down the IF2, all prefixes are allocated to the IF1. In other words, four prefixes (P1, P2, P3 and P4) are included in a RA message 1210 from the MAG 1201. Prefixes P1 and P2 logically have the LMA 1203 as their base point and the prefixes prefix P3 and P4 logically have the LMA 1204 as their base point.

Here, suppose that the MN 1200 activates the second interface IF2 to establish a connection to a MAG 1202 and shifts only prefix P1 to the IF2. In this case, the MN 1200 can send the MAG 1201 a reuse prefix request message 1211. New signaling to notify an HSS/AAA 1205 that the LMA associated with prefix P1 handles prefix P1 is included in the message 1211. The purpose of notifying the HSS/AAA 125 of information on the LMA is to notify a new MAG of the LMA handling prefix P1 when the MN 1200 establishes a connection to the new MAG.

In FIG. 12, when receiving the message 1211, the MAG 1201 first identifies the LMA 1203 associated with prefix P1. Note that this information already exists in the binding list. After identifying the address of the LMA 1203, the MAG 1201 sends the LMA 123 a deregistration message (PBU) 1212. A new handoff indicator option indicative of deregistration of a subset of prefixes (i.e., prefix P1) is embedded in the deregistration message 1212. Like normal deregistration, the binding life time is set to zero in the deregistration message 1212. A flag indicative of further processing such as to notify the HSS of the address of the LMA 1203 may be included in the mobility header of the deregistration message 1212.

When receiving the deregistration message 1212, the LMA 1203 performs two major operations. The first operation is that the LMA 1203 deletes prefix P1 from a binding cache associated with the IF1. The second operation is that the LMA 1203 sends the HSS 1205 a new message like a message 1213. This new message 1213 is, for example, notified to the HSS/AAA 1205 when access authentication related to the IF2 is sent, and to clearly express that the LMA 1203 is used in the reuse prefix request.

When receiving this message 1213, the HSS 1205 sends a response signaling (ACK message) 1214. Following this, a message 1215 is sent from the LMA 1203 to the MAG 1201. It will be apparent to those skilled in the art that the PBA message 1215 does not necessarily need to be sent after the ACK message 1214. After requesting reuse of prefix P1 from the IF1 using the MAG that was connected to the IF1, the MN 1200 connects the IF2 to a MAG 1202. Further, when establishing a connection through the IF2, the MN 1200 sends a normal vertical handoff trigger message 1216. When processing a new reuse prefix request message embedded in the message 1216, the MAG 1202 starts normal access authentication processing as indicated by a message 1217.

When returning information indicative of successful access authentication, the HSS/AAA 1205 adds a special mark indicative of being related to this reuse prefix request message and advertises the address of the LMA 1203 (e.g., through a message 1217). When receiving this new trigger from the HSS/AAA 1205, the MAG 1202 grasps the LMA to which the MAG 1202 needs to send a PBU. Then, the MAG 1202 sends the LMA 1203 a normal vertical handoff trigger message 1218. When receiving this message 1218 from the MN 1200, the LMA 1203 shifts prefix P1 to the IF2 or allocates it to a mobility session created for the IF2, and further sends a PBA message 1219 to create a prefix path for prefix P1 via the MAG 1202. When receiving the PBA message 1219, the MAG 1202 sends a RA 1220 to advertise prefix P1 via the IF2.

This spin-off example is to deregister prefix P1, having the first advantage of being able to prevent transmission of unnecessary packets to the MAG 1201 during the vertical handoff of prefix P1. When a prefix reuse method is used by shutting down an interface and activating another interface, selective deregistration of prefixes is useful.

A use case for supporting a scenario like this spin-off example is, for example, that the mobile node finds that the continuity of the prefix session by a PMIPv6 mobility management mechanism is not required on another interface. This is a case where one or plural prefixes are no longer in use earliest, or a case where the continuity of the session of one or plural prefixes is not required (i.e., only for web browsing). For example, packets sent toward prefix P1 may be discarded at the MAG 1201 due to the influence of high congestion in an access network, but according to this spin-off example, such an undesired situation can be avoided.

LMA information or APN information is not provided through a radio medium, and this has the second advantage of being able to reduce the amount of signaling through the radio medium. The address of the LMA 1203 is advertised from the HSS/AAA 1205, and this has the third advantage that two or more LMAs process PDNs to perform processing properly on a LMA cloud that one LMA cannot analyze from APN. The MAG does not need to analyze APN to perform matching between APN and HSS information in order to identify a correct LMA in a LMA cloud, and this has the fourth advantage of reducing processing load required at the MAG.

Next, a spin-off example in which the mobile node acquires a LMA from the previous MAG will be described. In the preferred embodiment of the present invention, the mobile node acquires the address of a LMA related to prefixes in the reuse prefix request message from a MAG (previous MAG) connected to an interface to which the prefixes have been allocated before that so that it can be passed to a new MAG or target MAG.

The new MAG or target MAG is connected to an interface on which a prefix or a subset of prefixes to be shifted need to be found. The previous MAG is connected to an interface (original interface from which the prefixes are shifted) on which the subset of prefixes are deleted. Note that the mobile node may decide to shift the subset from am interface to another interface.

In such a case, the mobile node may check with the previous MAG to acquire the address of the LMA associated with the subset of prefixes. This subset of prefixes is soon deleted from the interface connected to the previous MAG and shifted to another interface.

After acquiring the address of the LMA associated with the subset of prefixes from a response provided by the previous MAG, the mobile node sends a reuse prefix request message to a new MAG connected to an interface required to newly set the subset of prefixes.

At this time, the mobile node provides the target MAG with information on the address of the LMA associated with the prefixes. For example, when there are two prefixes to be associated with the reuse prefix request message to be sent to the target MAG, the mobile node provides the addresses of two LMAs (addresses each of which is added to each prefix). As a result, the target MAG grasps to which LMA a reuse prefix PBU needs to be sent.

For example, when information such as [P1, LMA1] and [P2, LMA2] is included in the reuse prefix request message provided to the target MAG, the target MAG sends LMA1 a reuse prefix request PBU with prefix P1 inserted in an HNP option and a new Handover Initiation (HI) option to indicate the reuse prefix request. Similarly, the target MAG sends LMA2 a reuse prefix request PBU with prefix P2 inserted in the HNP option and the new HI option to indicate the reuse prefix request.

In this method, the HSS/AAA associated with access authentication is not required. Therefore, when prefixes are shifted from an interface to another interface, signaling in the core network is reduced and hence useful. Further, the mobile node enables CMIPv6 operation, and if the address of a LMA (i.e., the address of a HA) is grasped, additional signaling for acquiring the address of the LMA will not be required. In addition, APN does not need to be analyzed to identify the correct LMA address, resulting in reduction of the processing load on the target MAG as well.

In the case of a LMA cloud, the target MAG needs to acquire information from the HSS/AAA in order to identify the correct LMA address, but if the LMA address is notified from the mobile node, the target MAG does not need to perform additional processing. Further, when the mobile node sends the reuse prefix request message to the new MAG using a context transfer mechanism, the previous may advertise the LMA address.

In the aforementioned embodiment of the present invention, the description is made taking three types of prefixes, but various other prefix characteristics can be considered handled, and the present invention is applicable to such various characteristics of prefixes. For example, a prefix for local breakout is to establish a network connection in such a manner that the MN 100 obtains a prefix for directly managing a visited domain, rather than via a home domain during being attached to the visited domain. In general, the prefix for local breakout is similar to a local prefix that is not maintained, but the prefix may be able to be maintained depending on the roaming-related configuration. Regarding the prefix for local breakout, it is desired that an address request be able to be made including detailed differences in the way to handle.

Further, there are prefixes related to use of plural prefixes in the same mobility management domain. The respective prefixes are provided mainly from different PDNs (Packet Data Network) for intended use of different services (for each intended use of audio, video, data, upload and download). They can be used depending on these services, the need to maintain a prefix, the way to use such as handover (allocation of the same prefix) across network interfaces for the services (sessions), and so on. Further, the present invention is also applicable to pre-allocation of a prefix considered necessary (quasi-default prefix) as well as the prefix allocated only after a network interface of the MN 100 is connected to a network (default prefix) and deletion of a prefix the use of which is not scheduled.

Here, the present invention is disclosed and described in the embodiment considered most practical and preferred. It will be apparent to those skilled in the art that various changes in design item or parameter details may be added without departing from the scope of the present invention.

For example, in this specification, the description is made on condition that the number of network interfaces of the MN 100 is plural, and this means that the number of logical interfaces for carrying out the present invention may be plural. For example, it may be configured such that one radio section is shared among multiple access schemes and switched at such a speed that its change does not matter from the standpoint of the network interfaces, or logical links are maintained in layer 2 to enable the same operation as a case where the network section is connected to a network through plural network interfaces.

Here, although the present invention is described based on a simple network configuration as shown, it is considered that the mobility management domain is configured in many different ways. For example, a configuration in which the MAG is a direct access router of the MN 100 and a configuration in which the MAG is a boundary router with a different access network (including roaming) and the MN 100 is once connected to the different access network and then connected to the MAG as the boundary router through the access network are considered. However, even in either of the configurations or conditions, it is obvious that various parameters or design sections such a procedure for the MN 100 to reach the MAG and a communication procedure for the MN are different but the operation of the present invention is applicable the same way.

The MN 100 may be configured of multiple communication devices. For example, there is a case where an extrapolated or built-in 3GPP communication device module or a non-3GPP communication device module is mounted in a computer such as a personal computer. Even for the MN 100 configured in various ways, the present invention has the equivalent effects. Further, in the aforementioned embodiment of the present invention, the description is made on condition that the MN 100 performs radio communication with a base station through a sending/receiving section, but the MN 100 may perform wired communication with an access point corresponding to the base station, and this can also has equivalent effects in terms of switching between access points.

Each of the functional blocks used in describing the aforementioned embodiment of the present invention is implemented as LSI (Large Scale Integration) typified by an integrated circuit. These may be made up of one chip individually, or they may be made up of one chip to include some or all of them. Here, although the LSI is assumed, it may be called an IC (Integrated Circuit), a system LSI, a super LSI, or an ultra LSI depending on the degree of integration.

Further, the technique for creation of an integrated circuit is not limited to LSI, and it may be implemented by a private circuit or a general-purpose processor. An FPGA (Field Programmable Gate Array) capable of programming after LSI manufacturing or a reconfigurable processor capable of reconfiguring connections or settings of circuit cells within the LSI may also be employed.

In addition, if integrated circuit technology capable of replacing LSI emerges with the development of semiconductor technology or another technology derived therefrom, the technology may, of course, be used to integrate the functional blocks. For example, applications of biotechnology may be possible.

### INDUSTRIAL APPLICABILITY

When a mobile terminal having multiple access technologies moves within a mobility management domain of a local network, the present invention has the advantage of minimizing the number of prefixes to be allocated to the mobile terminal so that the prefixes can be used effectively. The present invention is applicable to communication technology in a packet-switched data communication network, and particularly to communication technology when a mobile terminal communicating with a correspondent node has two or more addresses or communication technology when the network domain perform network-based local mobility management.

## Claims

1. A network prefix allocation administration system for managing allocation of a network prefix to a mobile terminal attached to a network-based local mobility domain, wherein
the system is configured not to maintain a state where a network prefix unnecessary for the mobile terminal to perform communication is allocated to the mobile terminal.

2. The network prefix allocation administration system according to claim 1, wherein a network entity within the local mobility domain is configured to detect a network prefix already allocated to the mobile terminal and unnecessary for communication of the mobile terminal, and delete the network prefix no longer required for communication of the mobile terminal from network prefix allocation to the mobile terminal.

3. The network prefix allocation administration system according to claim 1, wherein the mobile terminal is configured to detect a state in which a network prefix necessary for the mobile terminal to perform communication is allocated to the mobile terminal, and notify the local mobility domain of prefix preference information including information for achieving a state in which the network prefix detected by the use of network prefix optimization detecting means for detecting the optimization of use of the network prefix to be necessary for the mobile terminal is allocated.

4. The network prefix allocation administration system according to claim 3, wherein the mobile terminal is configured to detect a network prefix already allocated to the mobile terminal and no longer required for communication of the mobile terminal, and send the local mobility domain the prefix preference information for requesting deletion of the network prefix no longer required for communication of the mobile terminal from network prefix allocation to the mobile terminal so that the network entity within the local mobility domain will delete the network prefix no longer required for communication of the mobile terminal from network prefix allocation to the mobile terminal.

5. The network prefix allocation administration system according to claim 3, wherein the mobile terminal attached to the local mobility domain through a plurality of network interfaces is configured to detect a network prefix already allocated to a first network interface among the plurality of network interfaces of the mobile terminal and reusable on a second network interface different from the first network interface among the plurality of network interfaces of the mobile terminal, and send the local mobility domain the prefix preference information for requesting allocation of the reusable network prefix to the second network interface so that the network entity within the local mobility domain will change the allocation of the reusable network prefix from the first network interface to the second network interface of the mobile terminal.

6. The network prefix allocation system according to claim 5, wherein when a plurality of prefix managing entities for managing and allocating the network prefix to be allocated to the mobile terminal exist in the local network domain, a prefix managing entity capable of changing the allocation of the reusable network prefix is identified from among the plurality of prefix managing entities.

7. The network prefix allocation system according to claim 6, wherein the mobile terminal sends the local mobility domain an access point name associated with the reusable network prefix to identify the prefix managing entity capable of changing the allocation of the reusable network prefix.

8. The network prefix allocation system according to claim 6, wherein the mobile terminal identifies a prefix managing entity that has allocated the reusable network prefix, and when making a request for allocation of the reusable network prefix to the second network interface, the mobile terminal sends information on the identified prefix managing entity.

9. The network prefix allocation system according to claim 6, wherein the mobile terminal is configured to request a network node connected when the reusable network prefix has been allocated to identify a prefix managing entity that has allocated the reusable network prefix.

10. The network prefix allocation administration system according to claim 3, wherein the mobile terminal is configured to detect that a network prefix to be allocated to the mobile terminal is temporarily used, and send the local mobility domain the prefix preference information indicating that the network prefix to be allocated to the mobile terminal is temporarily used so that when the temporary use of the network prefix is completed, the network entity within the local mobility domain will delete the network prefix, the temporary use of which by means of the mobile terminal is completed, from network prefix allocation to the mobile terminal.

11. A mobile terminal attached to a network-based local mobility domain to perform communication using a network prefix to be allocated from the local mobility domain, the mobile terminal comprising:
use of prefix optimization detecting means for detecting a state in which a network prefix necessary for the mobile terminal to perform communication is allocated to the mobile terminal; and
prefix preference information notifying means for notifying the local mobility domain of prefix preference information including information for achieving a state in which the network prefix detected by the use of network prefix optimization detecting means and necessary for the mobile terminal is allocated.

12. The mobile terminal according to claim 11, wherein
the use of network prefix optimization detecting means detects a network prefix already allocated to the mobile terminal and no longer required for communication of the mobile terminal, and
the prefix preference information notifying means sends the local mobility domain the prefix preference information for making a request for deletion of the network prefix no longer required for communication of the mobile terminal from network prefix allocation to the mobile terminal.

13. The mobile terminal according to claim 12, wherein the use of network prefix optimization detecting means detects that the network interface is shut down so that a network prefix allocated to a network interface to be shut down will be detected as a network prefix already allocated to the mobile terminal and no longer required for communication of the mobile terminal.

14. The mobile terminal according to claim 12, wherein plural different types of prefixes are allocated from the local network domain so that the use of network prefix optimization detecting means detects unnecessary network prefix from among the plural different types of prefixes.

15. The mobile terminal according to claim 11, wherein
the mobile terminal is attached to the local mobility domain through a plurality of network interfaces,
the use of network prefix optimization detecting means detects a network prefix already allocated to a first network interface among the plurality of network interfaces of the mobile terminal and reusable on a second network interface different from the first network interface among the plurality of network interfaces of the mobile terminal, and
the prefix preference information notifying means sends the local mobility domain the prefix preference information for requesting allocation of the reusable network prefix to the second network interface.

16. The mobile terminal according to claim 15, wherein when detecting activation of the second network interface, the use of network prefix optimization detecting means determines whether the network prefix already allocated to the first network interface is usable on the second network interface.

17. The mobile terminal according to claim 16, wherein when a plurality of prefix managing entities for managing and allocating the network prefix to be allocated to the mobile terminal exist in the local network domain, a prefix managing entity capable of changing the allocation of the reusable network prefix is identified from among the plurality of prefix managing entities.

18. The mobile terminal according to claim 17, wherein an access point name associated with the reusable network prefix is sent to the local mobility domain to identify the prefix managing entity capable of changing the allocation of the reusable network prefix.

19. The mobile terminal according to claim 17, wherein a prefix managing entity that has allocated the reusable network prefix is identified, and when a request is made for allocation of the reusable network prefix to the second network interface, information on the identified prefix managing entity is sent.

20. The mobile terminal according to claim 17, wherein a network node connected when the reusable network prefix has been allocated is requested to identify a prefix managing entity that has allocated the reusable network prefix.

21. The mobile terminal according to claim 11, wherein
the use of network prefix optimization detecting means detects that a network prefix to be allocated to the mobile terminal is temporarily used, and
the prefix preference information notifying means sends the local mobility domain the prefix preference information indicating that the network prefix to be allocated to the mobile terminal is temporarily used.

22. The mobile terminal according to claim 21, wherein the use of network prefix optimization detecting means determines whether a network prefix needs to be maintained for the mobile terminal to perform communication.

23. The mobile terminal according to claim 21, wherein the use of network prefix optimization detecting means determines whether a network prefix to be allocated to the mobile terminal is used for a specific communication service alone.

24. The mobile terminal according to claim 21, wherein the use of network prefix optimization detecting means determines whether a network prefix to be allocated from now to the mobile terminal is temporarily used.

25. The mobile terminal according to claim 21, wherein the use of network prefix optimization detecting means determines whether a network prefix already allocated to the mobile terminal is temporarily used.

26. The mobile terminal according to claim 11, wherein when temporary use of the network prefix by means of the mobile terminal is completed, the prefix preference information notifying means notifies the local mobility domain of completion of temporary use of the network prefix.

27. The mobile terminal according to claim 11, wherein the prefix preference information notifying means inserts the prefix preference information into any one of a neighbor discovery message, a DHCP message, a layer 2 connection establishment signaling message and an AAA signaling message to notify the local mobility domain of the prefix preference information.

28. The mobile terminal according to claim 11, wherein
the use of network prefix optimization detecting means has a first detection function for detecting a network prefix already allocated to the mobile terminal and no longer required for communication of the mobile terminal,
the mobile terminal is attached to the local mobility domain through a plurality of network interfaces, and has a second detection function for detecting a network prefix already allocated to a first network interface among the plurality of network interfaces of the mobile terminal and usable on a second network interface different from the first network interface among the plurality of network interfaces of the mobile terminal,
the use of network prefix optimization detecting means has a third detection function for detecting that a network prefix to be allocated to the mobile terminal is temporarily used,
the prefix preference information notifying means has
a first notification function for sending the local mobility domain the prefix preference information for requesting deletion of the network prefix, detected by the first detection function to be unnecessary for communication of the mobile terminal, from network prefix allocation to the mobile terminal,
a second notification function for sending the local mobility domain the prefix preference information for requesting allocation of the reusable network prefix, detected by the second detection function, to the second network interface, and
a third notification function for sending the local mobility domain the prefix preference information on the network prefix, detected by the third detection function to be temporarily used, to indicate that the network prefix to be allocated to the mobile terminal is temporarily used, and
the mobile terminal further comprises mode selection means for selecting any one of applications for a network prefix to be allocated to the mobile terminal from among the application of the first detection function and the first notification function, the application of the second detection function and the second notification function, and the application of the third detection function and the third notification function.

29. The mobile terminal according to claim 28, wherein the mode selection means is configured to select the application of the second detection function and the second notification function for a home prefix, and the application of the third detection function and the third notification function for a local prefix.

30. A prefix allocation administration device for managing allocation of a network prefix to a mobile terminal attached to a network-based local mobility domain, the device comprising:
prefix correspondence maintaining means for managing allocation of a network prefix to the mobile terminal to maintain a correspondence between the network prefix allocated to the mobile terminal and the mobile terminal; and
prefix management means which, when receiving, from the mobile terminal, prefix preference information including information for achieving a state in which a network prefix necessary for the mobile terminal is allocated, changes the correspondence between the network prefix allocated to the mobile terminal and the mobile terminal based on the prefix preference information.

31. The prefix allocation administration device according to claim 30, wherein when the prefix preference information for requesting deletion of a network prefix unnecessary for communication of the mobile terminal from network prefix allocation to the mobile terminal is received from the mobile terminal, the prefix management means is configured to delete allocation of the network prefix unnecessary for communication of the mobile terminal from the correspondence between the network prefix allocated to the mobile terminal and the mobile terminal.

32. The prefix allocation administration device according to claim 30, wherein when the prefix preference information for requesting allocation of a network prefix to a second network interface, the network prefix being already allocated to a first network interface among a plurality of network interfaces of the mobile terminal attached to the local mobility domain and reusable on the second network interface different from the first network interface among the plurality of network interfaces of the mobile terminal is received from the mobile terminal, the prefix management means is configured to delete allocation of the reusable network prefix to the first network interface from the correspondence between the network prefix allocated to the mobile terminal and the mobile terminal, and allocates the reusable network prefix to the second network interface.

33. The prefix allocation administration device according to claim 30, wherein when the prefix preference information indicating that a network prefix to be allocated to the mobile terminal is temporarily used in the mobile terminal is received from the mobile terminal, the prefix management means is configured to add information to the temporarily used network prefix in the correspondence between the network prefix allocated to the mobile terminal and the mobile terminal.

34. The prefix allocation administration device according to claim 33, wherein the prefix management means is configured to decide timing of deleting allocation of the temporarily used network prefix from the correspondence between the network prefix allocated to the mobile terminal and the mobile terminal according to the type of the temporarily used network prefix.

35. The prefix allocation administration device according to claim 33, wherein after completion of the temporary use of the network prefix by means of the mobile terminal, when the prefix preference information notifying means receives, from the mobile terminal, information indicative of completion of the temporary use of the network prefix by means of the mobile terminal, the prefix management means is configured to delete the allocation of the temporarily used network prefix from the correspondence between the network prefix allocated to the mobile terminal and the mobile terminal.
